(19) Europäisches Patentamt
European Patent Office
Office européen des brevets

(11) EP 1 491 547 B1

(12) **EUROPÄISCHE PATENTSCHRIFT**

(45) Veröffentlichungstag und Bekanntmachung des Hinweises auf die Patenterteilung:
**07.12.2005 Patentblatt 2005/49**

(51) Int Cl.[7]: **C07F 7/18**

(21) Anmeldenummer: **04013567.5**

(22) Anmeldetag: **09.06.2004**

(54) **Organosiliciumverbindungen**

Organosilicon Compounds

Composés Organosiliciés

(84) Benannte Vertragsstaaten:
**AT BE BG CH CY CZ DE DK EE ES FI FR GB GR HU IE IT LI LU MC NL PL PT RO SE SI SK TR**

(30) Priorität: **20.06.2003 DE 10327624**

(43) Veröffentlichungstag der Anmeldung:
**29.12.2004 Patentblatt 2004/53**

(73) Patentinhaber: **Degussa AG**
**40474 Düsseldorf (DE)**

(72) Erfinder:
- **Korth, Karsten, Dr.**
  **79639 Grenzach-Whyhlen (DE)**
- **Albert, Philipp, Dr.**
  **79539 Lörrach (DE)**
- **Pieter, Reimund, Dr.**
  **64625 Bensheim (DE)**
- **Klockmann, Oliver, Dr.**
  **52382 Niederzier (DE)**
- **Hasse, Andre**
  **52441 Linnich (DE)**
- **Deschler, Ulrich, Dr.**
  **63877 Sailauf (DE)**
- **Witzsche, Susann**
  **79618 Rheinfelden (DE)**
- **Kiefer, Ingo**
  **79650 Schopfheim (DE)**

(56) Entgegenhaltungen:
**EP-A- 1 285 926** **EP-A- 1 394 167**

- **DATABASE BEILSTEIN BEILSTEIN INSTITUTE FOR ORGANIC CHEMISTRY, FRANKFURT-MAIN, DE; 1995, XP002300368 Database accession no. BRN 7134835 & VORONKOV, M. G. ET AL.: RUSS. J. GEN. CHEM., Bd. 64, Nr. 1.2, 1994, Seiten 144-145,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 491 547 B1

Printed by Jouve, 75001 PARIS (FR)

## Beschreibung

Die Erfindung betrifft Organosiliciumverbindungen, ein Verfahren zu ihrer Herstellung, sowie ihre Verwendung.

Polysulfanalkyltrialkoxysilane, wie zum Beispiel Bis[3-triethoxysilylpropyl]tetrasulfan oder Bis[3-triethoxysilylpropyl] disulfan, und Mercaptoalkyltrialkoxysilane, wie zum Beispiel 3-Mercaptopropyltrimethoxysilan oder 3-Mercaptopropyltriethoxysilan, werden als Haftvermittler zwischen anorganischen Materialien, beispielsweise Glasfasern, Metallen oder oxidischen Füllstoffen, und organischen Polymeren, beispielsweise Duroplasten, Thermoplasten und Elastomeren, eingesetzt (Angew. Chem. 98, (1986) 237-253).

Diese Haftvermittler beziehungsweise Kupplungs- oder Verbindungsagenzien bilden sowohl zum Füllstoff als auch zum Polymer stabile, chemische Bindungen und bewirken somit zwischen der Füllstoffoberfläche und dem Polymer eine gute Wechselwirkung. Sie erniedrigen die Mischungsviskosität und erleichtern die Dispersion des Füllstoffs während des Mischvorgangs.

Desweiteren ist bekannt, daß die Verwendung von handelsüblichen Silanhaftvermittlern (DE 22 55 577) mit drei Alkoxysubstituenten am Siliciumatom zur Freisetzung beträchtlicher Mengen an Alkohol während und nach der Anbindung an den Füllstoff führt. Da in der Regel Trimethoxy- und Triethoxy-substituierte Silane eingesetzt werden, werden die entsprechenden Alkohole Methanol und Ethanol während der Applikation freigesetzt (Berkemeier, D.; Hader, W.; Rinker, M.; Heiss, G. Mixing of silica compounds from the viewpoint of a manufacturer of internal mixers. Gummi, Fasern, Kunststoffe (2001), 54(1), 17-22).

Es ist weiterhin bekannt, daß Methoxy- und Ethoxysubstituierte Silane hydrolyseaktiver sind, als die entsprechenden langkettigen Alkoxy-substituierten Silane (E. R. Pohl, F. D. Osterholtz *J. Adhesion Sci. Technology* 6(1) 1992, 127-149) und somit schneller an den Füllstoff anbinden können, so daß auf den Einsatz von Methoxy- und Ethoxysubstituierten Silanen aus wirtschaftlicher Sicht bisher nicht verzichtet werden kann.

Aus Database Beilstein Beilstein Institute for Organic Chemistry, Frankfurt-Main, DE; 1995, XP002300368 Database accession no. BRN 7134835 ist die Verbindung (3-Thiocyanatopropyl)-tris(trimethylsiloxy)-silan bekannt.

Aus DE 10163941 bzw. EP1394167 sind Organosiliciumverbindungen der allgemeinen Formel $[RO(R'O)_2Si-R'']_nX_m$ und $[R'O(RO)_2Si-R'']_nX_m$ mit R=Methyl oder Ethyl bekannt.

Ein erheblicher Nachteil bei der Verwendung der bekannten alkoxysilanbasierenden Kopplungsagenzien ist die Freisetzung stöchiometrischer Mengen flüchtiger Alkohole, wie beispielsweise Methanol und Ethanol, in die Umwelt während und nach der Anbindung des Alkoxysilans an den Füllstoff

Aufgabe der Erfindung ist es, Organosiliciumverbindungen bereitzustellen, die keine flüchtigen Alkohole bei der Anbindung an den Füllstoff freisetzen können und gleichzeitig die hohe Reaktivität gegenüber dem Füllstoff beibehalten.

Gegenstand der Erfindung sind Organosiliciumverbindungen der allgemeinen Formel I

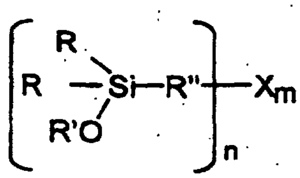

I

ausgenommen (3-Thiocyanatopropyl)-tris (trimethylsiloxy) silan, wobei R gleich oder verschieden und eine R'O-Gruppe oder $C_1$-$C_{12}$-Alkylgruppe, bevorzugt Methyl- oder Ethyl-Gruppe, ist,

R' gleich oder verschieden und eine $C_{12}$-$C_{24}$ verzweigte oder unverzweigte einbindige Alkyl- oder Alkenyl-Gruppe, Arylgruppe, Aralkylgruppe oder $R'''_3Si$, mit R''' gleich $C_1$-$C_{30}$ verzweigte oder unverzweigte Alky- oder Alkenyl-Gruppe, Aralkylgruppe oder Arylgruppe ist, bevorzugt $C_1$-$C_8$,

R'' eine verzweigte oder unverzweigte, gesättigte oder ungesättigte, aliphatische, aromatische oder gemischt aliphatische /aromatische zweibindige $C_1$-$C_{30}$ Kohlenwasserstoffgruppe ist,

X SH mit n=1 und m=1, SCN mit n=1 und m=1 oder S mit n=2 und m=1-14 und Gemische davon, ist.

Die erfindungsgemäße Organosiliciumverbindung der allgemeinen Formel I kann für R vorzugsweise eine oder zwei Alkylgruppen enthaltene

R'' kahn $CH_2CH_2$, $CH_2CH_2CH_2$, $CH_2CH_2CH_2CH_2$, $CH(CH_3)$, $CH_2CH(CH_3)$, $CH(CH_3)CH_2$, $C(CH_3)_2$, CH $(C_2H_5)$, $CH_2CH_2CH(CH_3$ , $CH_2CH$ $(CH_3)CH_2$ oder

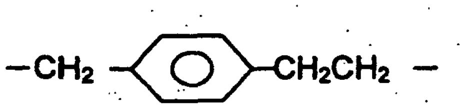

bedeuten.

Erfindungsgemäße Organosiliciumverbindungen der Formel I können sein

$$[(C_yH_{2y+1}O)(R)_2Si(CH_2)_3]S_m[(CH_2)_3Si(C_yH_{2y+1}O)(R)_2],$$

$$[(C_yH_{2y+1}O)_2(R)Si(CH_2)_3]S_m[(CH_2)_3Si(C_yH_{2y+1}O)(R)_2],$$

$$[(C_yH_{2y+1}O)_3Si(CH_2)_{3]}S_m[(CH_2)_3Si(C_yH_{2y+1}O)(R)_2],$$

$$[(C_yH_{2y+1}O)(R)_2Si(CH_2)_3]S_m[(CH_2)_3Si(C_yH_{2y+1}O)_2(R)],$$

$$[(CyH_{2y+1}O)_2(R)Si(CH_2)_3]S_m[(CH_2)_3Si(C_yH_{2y+1}O)_2(R)],$$

$$[(C_yH_{2y+1}O)_3Si(CH_2)_3]S_m(CH_2)_3Si(C_yH_{2y+1}O)_2(R)],$$

$$[(C_yH_{2y+1}O)(R)_2Si(CH_2)_3]S_m[(CH_2)_3Si(C_yH_{2y+1}O)_3],$$

$$[(C_yH_{2y+1}O)_2(R)Si(CH_2)_3]S_m[(CH_2)_3Si(C_yH_{2y+1}O)_3]\text{oder}$$

$$[(C_yH_{2y+1}O)_3Si(CH_2)_3]S_m(CH_2)_3Si(C_yH_{2y+1}O)_3],$$

wobei y gleich oder verschieden und eine Zahl von 12 bis 24 ist, oder Mischungen der einzelnen, oben benannten Silane.

Erfindungsgemäße Organosiliciumverbindungen der Formel I können sein

$$[(C_{12}H_{25}O)_3Si(CH_2)_3]S_m[(CH_2)_3Si(C_{12}H_{25}O)_3],$$

$$[(C_{14}H_{29}O)_3Si(CH_2)_3S_m[(CH_2)_3Si(C_{14}H_{29}O)_3],$$

$$[(C_{16}H_{33}O)_3Si(CH_2)_3]S_m[(CH_2)_3Si(C_{16}H_{33}O)_3],$$

$$[(C_{18}H_{37}O)_3Si(CH_2)_3]S_m[(CH_2)_3Si(C_{18}H_{37}O)_3],$$

$$[(C_{12}H_{25}O)_3Si(CH_2)_3]S_m[(CH_2)_3Si(C_{12}H_{25}O)_3],$$

$$[(C_{14}H_{29}O)_3Si(CH_2)_3]S_m[(CH_2)_3Si(C_{14}H_{29}O)_3],$$

$[(C_{16}H_{33}O)_3Si(CH_2)_3]S_m(CH_2)_3Si(C_{16}H_{33}O)_3]$,

$[(C_{18}H_{37}O)_3Si(CH_2)_3]S_m[(CH_2)_3Si(C_{18}H_{37}O)_3]$,

$[(C_{12}H_{25}O)_2(CH_3)Si(CH_2)_3S_m[(CH_2)_3Si(CH_3)(C_{12}H_{25}O)_2]$,

$[(C_{12}H_{25}O)(C_{14}H_{29}O)(CH_3)Si(CH_2)_3]S_m[(CH_2)_3Si(CH_3)(C_{12}H_{25}O)(C_{14}H_{29}O)]$,

$[(C_{12}H_{25}O)(C_{14}H_{21}O)(CH_3)Si(CH_2)_3]S_m[(CH_2)_3Si(CH_3)(C_{12}H_{25}O)(C_{12}H_{25}O)]$,

$[(C_{12}H_{25}O)(C_{16}H_{33}O)(CH_3)Si(CH_2)_3]S_m[(CH_2)_3Si(CH_3)(C_{12}H_{25}O)(C_{16}H_{33}O)]$,

$[(C_{12}H_{25}O)(C_{18}H_{37}O(CH_3)Si(CH_2)_3]S_m[(CH_2)_3Si(CH_3)(C_{12}H_{25}O)(C_{18}H_{37}O)]$,

$[(C_{12}H_{25}O)(C_{19}H_{37}O)(CH_3)Si(CH_2)_3]S_m[(CH_2)_3Si(CH_3)(C_{12}H_{25}O)(C_{18}H_{37}O)]$,

$[(C_{14}H_{29}O)_2(CH_3)Si(CH_2)_3]S_m[(CH_2)_3Si(CH_3)(C_{14}H_{29}O)_2]$,

$[(C_{14}H_{29}O)(C_{16}H_{33}O)(CH_3)Si(CH_2)_3]S_m[(CH_2)_3Si(CH_3)(C_{14}H_{29}O)(C_{16}H_{33}O)]$,

$(C_{14}H_{29}O)(C_{16}H_{37}O)(CH_3)Si(CH_2)_3S_m[(CH_2)_3Si(CH_3)(C_{14}H_{29}O)(C_{18}H_{37}O)]$,

$[(C_{16}H_{33}O)_2(CH_3)Si(CH_2)_3]S_m[(CH_2)_3Si(CH_3)(C_{16}H_{33}O)_2]$,

$[(C_{16}H_{33}O)(C_{18}H_{37}O)(CH_3)Si(CH_2)_3]S_m[(CH_2)_3Si(CH_3)(C_{16}H_{33}O)(C_{18}H_{37}O)]$,

$[(C_{18}H_{37}O)_2(CH_3)Si(CH_2)_3]S_m[(CH_2)_3Si(CH_3)(C_{18}H_{37}O)_2]$,

$[(C_{12}H_{25}O)(CH_3)_2Si(CH_2)_3S_m[(CH_2)_3Si(CH_3)_2(C_{12}H_{25}O)]$,

$[(C_{12}H_{25}O)(CH_3)_2Si(CH_2)_3]S_m[(CH_2)_3Si(CH_3)_2(C_{14}H_{29}O)],$

$[(C_{12}H_{25}O)(CH_3)_2Si(CH_2)_3Sm[(CH_2)_3Si(CH_3)_2(C_{16}H_{33}O)],$

$[(C_{12}H_{25}O)(CH_3)_2Si(CH_2)_3]S_m[(CH_2)_3Si(CH_3)_2(C_{18}H_{37}O)],$

$[(C_{14}H_{29}O)(CH_3)_2Si(CH_2)_3]S_m[(CH_2)_3Si(CH_3)_2(C_{14}H_{29}O)],$

$[(C_{14}H_{29}O)(CH_3)_2Si(CH_2)_3]S_m[(CH_2)_3Si(CH_3)_2(C_{16}H_{33}O)],$

$[(C_{14}H_{29}O)(CH_3)_2Si(CH_2)_3)S_m[(CH_2)_3Si(CH_3)_2(C_{18}H_{37}O)],$

$[(C_{16}H_{33}O)(CH_3)_2Si(CH_2)_3]S_m[(CH_2)_3Si(CH_3)_2(C_{16}H_{33}O)],$

$[(C_{16}H_{33}O)(CH_3)_2Si(CH_2)_3]S_m[(CH_2)_3Si(CH_3)_2(C_{18}H_{37}O)],$

$[(C_{18}H_{37}O)(CH_3)_2Si(CH_2)_3]S_m[(CH_2)_3Si(CH_3)_2(C_{18}H_{37}O)],$

$(C_{12}H_{25}O)_3Si\text{-}(CH_2)_3\text{-}SH,$

$(C_{12}H_{25}O)_2(C_{14}H_{29}O)Si\text{-}(CH_2)_3\text{-}SH,$

$(C_{12}H_{25}O)_2(C_{16}H_{33}O)Si\text{-}(CH_2)_3\text{-}SH,$

$(C_{12}H_{25}O)_2(C_{18}H_{37}O)Si\text{-}(CH_2)_3\text{-}SH,$

$(C_{12}H_{25}O)(C_{14}H_{29}O)(C_{16}H_{33}O)Si\text{-}(CH_2)_3\text{-}SH,$

$(C_{12}H_{25}O)(C_{l4}H_{29}O)(C_{18}H_{37}O)Si\text{-}(CH_2)_3\text{-}SH,$

$(C_{12}H_{25}O)(C_{16}H_{33}O)(C_{18}H_{37}O)Si\text{-}(CH_2)_3\text{-}SH,$

$(C_{14}H_{29}0)_3Si\text{-}(CH_2)_3\text{-}SH,$

$(C_{14}H_{29}O)_2(C_{12}H_{25}O)Si\text{-}(CH_2)_3\text{-}SH,$

$(C_{14}H_{29}O)_2(C_{16}H_{33}O)Si\text{-}(CH_2)_3\text{-}SH,$

$(C_{14}H_{29}O)_2(C_{18}H_{37}O)Si-(CH_2)_3-SH$,

$(C_{14}H_{29}O)(C_{16}H_{33}O)(C_{18}H_{37}O)Si-(CH_2)_3-SH$,

$(C_{16}H_{33}O)_3Si-(CH_2)_3-SH$,

$(C_{16}H_{33}O)_2(C_{12}H_{25}O)Si-(CH_2)_3-SH$,

$(C_{16}H_{33}O)_2(C_{14}H_{29}O)Si-(CH_2)_3-SH$,

$(C_{16}H_{33}O)_2(C_{18}H_{37}O)Si-(CH_2)_3-SH$,

$(C_{18}H_{37}O)_3Si-(CH_2)_3-SH$,

$(C_{18}H_{37}O)_2(C_{12}H_{25}O)Si-(CH_2)_3-SH$,

$(C_{18}H_{37}O)_2(C_{14}H_{29}O)Si-(CH_2)_3-SH$,

$(C_{18}H_{37}O)_2(C_{16}H_{33}O)Si-(CH_2)_3-SH$,

$(C_{12}H_{25}O)_2(CH_3)Si-(CH_2)_3-SH$,

$(C_{12}H_{25}O)(C_{14}H_{29}O)(CH_3)Si-(CH_2)_3-SH$,

$(C_{12}H_{25}O)(C_{16}H_{33}O)(CH_3)Si-(CH_2)_3-SH$,

$(C_{12}H_{25}O)(C_{19}H_{37}O)(CH_3)Si-(CH_2)_3-SH$,

$(C_{14}H_{29}O)_2(CH_3)-Si-(CH_2)_3-SH$,

$(C_{14}H_{29}O)(C_{16}H_{33}O)(CH_3)Si-(CH_2)_3-SH$,

$(C_{14}H_{29}O)(C_{18}H_{37}O)(CH_3)Si-(CH_2)_3-SH$,

$(C_{16}H_{33}O)_2(CH_3)-Si-(CH_2)_3-SH$,

$(C_{16}H_{33}O)(C_{18}H_{37}O)(CH_3)Si-(CH_2)_3-SH$,

$$(C_{18}H_{37}O)_2(CH_3)\text{-Si-}(CH_2)_3\text{-SH},$$

$$(C_{12}H_{25}O)(CH_3)_2\text{-Si-}(CH_2)_3\text{-SH},$$

$$(C_{14}H_{29}O)(CH_3)_2\text{-Si-}(CH_2)_3\text{-SH},$$

$$(C_{16}H_{33}O)(CH_3)_2\text{-Si-}(CH_2)_3\text{-SH},$$

$$(C_{18}H_{37}O)(CH_3)_2\text{-Si-}(CH_2)_3\text{-SH},$$

$$(C_{12}H_{25}O)_2(C_{14}H_{29}O)\text{Si-}(CH_2)_3\text{-SCN},$$

$$(C_{12}H_{25}O)_2(C_{16}H_{33}O)\text{Si-}(CH_2)_3\text{-SCN},$$

$$(C_{12}H_{25}O)_2(C_{18}H_{37}O)\text{Si-}(CH_2)_3\text{-SCN},$$

$$(C_{14}H_{29}O)_2(C_{12}H_{25}O)\text{Si-}(CH_2)_3\text{-SCN},$$

$$(C_{14}H_{29}O)_2(C_{16}H_{33}O)\text{Si-}(CH_2)_3\text{-SCN},$$

$$(C_{14}H_{29}O)_2(C_{18}H_{37}O)\text{Si-}(CH_2)_3\text{-SCN},$$

$$(C_{16}H_{33}O)_2(C_{12}H_{25}O)\text{Si-}(CH_2)_3\text{-SCN},$$

$$(C_{16}H_{33}O)_2(C_{14}H_{29}O)\text{Si-}(CH_2)_3\text{-SCN},$$

$$(C_{16}H_{33}O)_2(C_{18}H_{37}O)\text{Si-}(CH_2)_3\text{-SCN},$$

$$(C_{18}H_{37}O)_2(C_{12}H_{25}O)\text{Si-}(CH_2)_3\text{-SCN},$$

$$(C_{18}H_{37}O)_2(C_{14}H_{29}O)\text{Si-}(CH_2)_3\text{-SCN}$$

oder

$$(C_{18}H_{37}O)_2\ (C_{16}H_{33}O)\text{Si- }(CH_2)_3\text{-SCN}.$$

Aus den erfindungsgemäßen Silanen der Formel I können durch Wasserzugabe leicht Kondensationsprodukte, das heißt Oligo- und Polysiloxane gebildet werden. Die Oligo- und Polysiloxane können durch Oligomerisierung oder Cooligomerisierung der entsprechenden Alkoxysilanverbindungen der allgemeinen Formel I durch Wasserzugabe und dem Fachmann auf diesem Gebiet bekannte Additivzugabe und Verfahrensweise erhalten werden.

Diese oligomeren oder polymeren Siloxane der Verbindungen der Formel I können als Kopplungsreagenzien

für dieselben Anwendungen wie die monomeren Verbindungen der Formel I verwendet werden.

Die erfindungsgemäßen Organosiliciumverbindungen können auch als Mischung von Organosiliciumverbindungen verwendet werden, beispielsweise als Mischungen der Organosiliciumverbindungen der allgemeinen Formel I oder als Mischungen der oligomeren oder polymeren Siloxane von Organosiliciumverbindungen der allgemeinen Formel I oder als Mischungen von Organosiliciumverbindungen der allgemeinen Formel I mit Mischungen der oligomeren oder polymeren Siloxane von Organosiliciumverbindungen der allgemeinen Formel I.

Ein weiterer Gegenstand der Erfindung ist ein Verfahren zur Herstellung der erfindungsgemäßen Organosiliciumverbindungen, welches dadurch gekennzeichnet ist, daß man Silane der allgemeinen Formel II

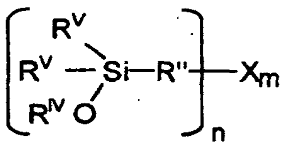

II

wobei R" die oben angegebene Bedeutung aufweist, $R^V$ gleich oder verschieden und eine $R^{IV}O$-, $C_1$-$C_{12}$-Alkylgruppe, bevorzugt Methyl- oder Ethyl-Gruppe, ist, $R^{IV}$ gleich oder verschieden und eine Methyl- oder Ethyl-Gruppe ist, mit Alkoholen der allgemeinen Formel R'-OH, in der R' die oben angegebene Bedeutung aufweist, unter Abspaltung von $R^{IV}$-OH, katalysiert umsetzt, wobei das molare Verhältnis von R'-OH zu $R^{IV}O$-Gruppen mindestens 1, vorzugsweise mindestens 1,2, ist, und $R^{IV}$-OH vom Reaktionsgemisch kontinuierlich oder diskontinuierlich abtrennt.

An den entstandenen Alkoxysilanen kann mittels hochauflösender 29-Si NMR oder GPC, die exakte Zusammensetzung der entstandenen Substanzgemische bezüglich der relativen Verteilung der Alkoxysubstituenten zueinander ermittelt werden.

Das entstehende Gemisch von homologen Alkoxysilanverbindungen kann als solches oder auch aufgetrennt in einzelne Verbindungen oder isolierte Fraktionen verwendet werden.

Die für die Umesterung verwendeten Alkohole R'OH können sowohl als Gemische verschiedener Alkohole wie auch als reine Substanzen eingesetzt werden. Als Alkohole R'-OH können beispielsweise Dodecanol, Tetradecanol, Hexadecanol, Octadecanol, 1-Eicosanol oder hydroxygruppenfunktionalisierte Naturstoffe, eingesetzt werden.

Die für die Umesterung als Katalysatoren verwendeten Verbindungen können metallhaltig oder metallfrei sein.

Als metallfreie Verbindungen können organische Säuren, wie beispielsweise Trifluoressigsäure, Trifluormethansulfonsäure oder p-Toluolsulfonsäure, Trialkylammoniumverbindungen $R_3NH^+X^-$ oder Basen, wie beispielsweise Trialkylamine $NR_3$, eingesetzt werden.

Die für die Umesterung als Katalysatoren eingesetzten Metallverbindungen können Übergangsmetallverbindungen sein.

Als Metallverbindungen für die Katalysatoren können Metallchloride, Metalloxide, Metalloxychloride, Metallsulfide, Metallsulfochloride, Metallalkoholate, Metallthiolate, Metalloxyalkoholate, Metallamide, Metallimide oder Übergangsmetallverbindungen mit multiplen gebundenen Liganden eingesetzt werden.

Beispielsweise können als Metallverbindungen Halogenide, Amide oder Alkoholate der 3. Hauptgruppe ($M^{3+}$= B, Al, Ga, In, Tl: $M^{3+}(OMe)_3$, $M^{3+}$ (OEt) 3, $M^{3+}$ $(OC_3H_7)_3$, $M^{3+}$ $(OC_4H_9)_3$) ,

Halogenide, Oxide, Sulfide, Imide, Alkoholate, Amide, Thiolate und Kombinationen der genannten Substituentenklassen mit multiple gebundenen Liganden an Verbindungen der Lanthaniden-Gruppe (Seltenen Erden, Ordnungszahl 58 bis 71 im Periodensystem der Elemente), Halogenide, Oxide, Sulfide, Imide, Alkoholate, Amide, Thiolate und Kombinationen der genannten Substituentenklassen mit multiple gebundenen Liganden an Verbindungen der 3. Nebengruppe ($M^{3+}$= Sc,Y,La: $M^{3+}(OMe)_3$, $M^{3+}(OEt)_3$, $M^{3+}(OC_3H_7)_3$, $M^{3+}(OC_4H_9)_3$, $CPM^{3+}(Cl)_2$, cp $cpM^{3+}(OMe)_2$, $cpM^{3+}(OEt)_2$, $cpM^{3+}(NMe_2)$ mit cp = Cyclopentadienyl),

Halogenide, Sulfide, Amide, Thiolate oder Alkoholate der 4. Hauptgruppe ($M^{4+}$=Si, Ge, Sn, Pb: $M^{4+}(OMe)_4$, $M^{4+}$ $(OEt)_4$, $M^{4+}$ $(OC_3H_7)_4$, $M^{4+}(OC_4H_9)_4$; $M^{2+}$=Sn,Pb: $M^{2+}(OMe)_2$, $M^{2+}$ $(OEt\ )_2$, $M^{2+}$ $(OC_3H_7)_2$, $M^{2+}$ $(OC_4H_9)\ _2$) , Zinndilaurat, Zinndiacetat, $Sn(OBu)_2$,

Halogenide, Oxide, Sulfide, Imide, Alkoholate, Amide, Thiolate und Kombinationen der genannten Substituentenklassen mit multiple gebundenen Liganden an Verbindungen der 4. Nebengruppe ($M^{4+}$=Ti,Zr,Hf: $M^{4+}$ $(F)\ _4$, $M^{4+}(Cl)_4$, $M^{4+}$ $(\ Br)_4$, $M^{4+}(I)_4$, $M^{4+}(OMe)_4$, $M^{4+}(OEt)_4$, $M^{4+}(OC_3H_7)_4$, $M^{4+}(OC_4H_9)_4$, $cp_2Ti(Cl)_2$, $cP_2Zr$ $(Cl)_2$, $cp_2Hf(Cl)_2$, $cp_2Ti(OMe)_2$, $cp_22r$ (OMe) 2 , $cp_2Hf$ $(OMe)_2$, $cpTi(Cl)_3$, $cpZr(Cl)_3$,$cpHf(Cl)_3$, $cpTi(OMe)_3$, $cpZr(OMe)_3$, cpHf $(OMe)_3$, $M^{4+}(NMe_2)_4$, $M^{4+}$ $(NEt_2)_4$, $M^{4+}$ $(NHC_4H_9)_4$),

Halogenide, Oxide, Sulfide, Imide, Alkoholate, Amide, Thiolate und Kombinationen der genannten Substituentenklassen mit multiple gebundenen Liganden an Verbindungen der 5. Nebengruppe ($M^{5+}$, $M^{4+}$ oder $M^{3+}$=V, Nb, Ta: $M^{5+}$ (OMe) $_{5,}$ $M^{5+}$ (OEt) $_5$, $M^{5+}(OC_3H_7)$ $_{5,}$ $M^{5+}(OC_4H_9)$ $_{5,}$ $M^{3+}O(OMe)_3$, $M^{3+}O(OEt)_3$, $M^{3+}O$ $(OC_3H_7)_3$, $M^{3+}O$ $(OC_4H_9)_3$, cpV

$(OMe)_4$, cpNb $(OMe)_3$, cpTa $(OMe)_3$, cpV$(OMe)_2$, cpNb $(OMe)_3$, cpTa$(OMe)_3$),
Halogenide, Oxide, Sulfide, Imide, Alkoholate, Amide, Thiolate und Kombinationen der genannten Substituentenklassen mit multiple gebundenen Liganden an Verbindungen der 6. Nebengruppe ($M^{6+}$, $M^{5+}$ oder $M^{4+}$=Cr, Mo, W: $M^{6+}(OMe)_6$, $M^{6+}(OEt)_6$, $M^{6+}$ $(OC_3H_7)_6$, $M^{6+}(OC_4H_9)_6$, $M^{6+}O$ $(OMe)_4$, $M^{6+}O(OEt)_4$, $M^{6+}O$ $(OC_3H_7)_4$, $M^6$+O $(OC_4H_9)_4$, $M^{6+}O_2$ $(OMe)_2$, $M^{6+}O_2$ $(OEt)_2$, $M^{6+}O_2$ $(OC_3H_7)_2$, $M^{6+}O_2$ $(OC_4H_9)_2$, $M^{6+}O_2$ $(OSiMe_3)_2$) oder
Halogenide, Oxide, Sulfide, Imide, Alkoholate, Amide, Thiolate und Kombinationen der genannten Substituentenklassen mit multiple gebundenen Liganden an Verbindungen der 7. Nebengruppe ($M^{7+}$, $M^{6+}$, $M^{5+}$ oder $M^{4+}$=Mn, Re: $M^{7+}O$ $(OMe)_5$, $M^{7+}O$ $(OEt)_5$, $M^{7+}O$ $(OC_3H_7)_5$, $M^{7+}O$ $(OC_4H_9)_5$, $M^{7+}O_2$ $(OMe)_3$, $M^7$+$O_2$ $(OEt)_3$, $M^7$+$O_2$ $(OC_3H_7)_3$, $M^{7+}O_2$ $(OC_4H_9)_3$, $M^{7+}O_2(OSiMe_3)_3$, $M^{7+}O_3(OSiMe_3)$, $M^{7+}O_3(CH_3)$) verwendet werden.

Die Metall- und Übergangsmetallverbindungen können eine freie Koordinationsstelle am Metall besitzen.

Als Katalysatoren können auch Metall- oder Übergangsmetallverbindungen verwendet werden, die durch Wasserzugabe zu hydrolisierbaren Metall- oder Übergangsmetallverbindungen gebildet werden.

In einer besonderen Ausführungsform kann man Titanate, wie beispielsweise Tetra-n-butyl-orthotitanat oder Tetra-iso-propyl-orthotitanat, als Katalysatoren verwenden.

Die Reaktion kann man bei Temperaturen zwischen 20 und 200 °C, vorzugsweise zwischen 50 und 150°C, besonders bevorzugt zwischen 70 und 130°C, durchführen. Zur Vermeidung von Kondensationsreaktionen kann es vorteilhaft sein, die Reaktion in einer wasserfreien Umgebung, idealerweise in einer Inertgasatmosphäre, durchzuführen.

Die Reaktion kann man bei Normaldruck oder reduziertem Druck durchführen. Die Reaktion kann man kontinuierlich oder diskontinuierlich durchführen.

Die erfindungsgemäßen Organosiliciumverbindungen können als Haftvermittler zwischen anorganischen Materialien (zum Beispiel Glasfasern, Metallen, oxidischen Füllstoffen, Kieselsäuren) und organischen Polymeren (zum Beispiel Duroplasten, Thermoplasten, Elastomeren) beziehungsweise als Vernetzungsmittel und Oberflächenmodifizierungsmittel verwendet werden. Die erfindungsgemäßen Organosiliciumverbindungen können als Kopplungsreagenzien in gefüllten Kautschukmischungen, beispielsweise Reifenlaufflächen, verwendet werden.

Ein weiterer Gegenstand der Erfindung sind Kautschukmischungen und -vulkanisate, welche dadurch gekennzeichnet sind, daß sie Kautschuk, Füllstoff, wie beispielsweise gefällte Kieselsäure, gegebenenfalls weitere Kautschukhilfsmittel, sowie mindestens eine der erfindungsgemäßen Organosiliciumverbindungen enthalten.

Die erfindungsgemäßen Organosiliciumverbindungen können in Mengen von 0,1 bis 50 Gew-%, bevorzugt 0,1 bis 25 Gew.-%, besonders bevorzugt 1 bis 20 Gew.-%, bezogen auf die Menge des eingesetzten Kautschuks, eingesetzt werden.

Die Zugabe der erfindungsgemäßen Organosiliciumverbindungen, sowie die Zugabe der Füllstoffe kann bei Massetemperaturen von 100 bis 200 °C erfolgen. Sie kann jedoch auch bei tieferen Temperaturen von 40 bis 100 °C, zum Beispiel zusammen mit weiteren Kautschukhilfsmitteln, erfolgen.

Die erfindungsgemäßen Organosiliciumverbindungen können sowohl in reiner Form als auch aufgezogen auf einen inerten organischen oder anorganischen Träger, sowie vorreagiert mit einem organischen oder anorganischen Träger dem Mischprozeß zugegeben werden. Bevorzugte Trägermaterialien können gefällte oder pyrogene Kieselsäuren, Wachse, Thermoplaste, natürliche oder synthetische Silikate, natürlich oder synthetische Oxide, speziell Aluminiumoxid oder Ruße sein.

Desweiteren können die erfindungsgemäßen Organosiliciumverbindungen auch vorreagiert mit dem einzusetzenden Füllstoff dem Mischprozeß zugegeben werden.

Als Füllstoffe können für die erfindungsgemäßen Kautschukmischungen die folgenden Füllstoffe eingesetzt werden:

- Ruße: Die hierbei zu verwendenden Ruße sind nach dem Flammruß-, Furnace-, Gasruß oder Thermal-Verfahren hergestellt und besitzen BET-Oberflächen von 20 bis 200 $m^2/g$. Die Ruße können gegebenenfalls auch Heteroatome, wie zum Beispiel Si, enthalten.

- amorphe Kieselsäuren, hergestellt zum Beispiel durch Fällung von Lösungen von Silikaten oder Flammenhydrolyse von Siliciumhalogeniden mit spezifischen Oberflächen von 5 bis 1000 $m^2/g$, vorzugsweise 20 bis 400 $m^2/g$ (BET-Oberfläche) und mit Primärteilchengrößen von 10 bis 400 nm. Die Kieselsäuren können gegebenenfalls auch als Mischoxide mit anderen Metalloxiden, wie Al-, Mg-, Ca-, Ba-, Zn- und Titanoxiden, vorliegen.

- Synthetische Silikate, wie Aluminiumsilikat, Erdalkalisilikate, wie Magnesiumsilikat oder - Calciumsilikat, mit BET-Oberflächen von 20 bis 400 $m^2/g$ und Primärteilchendurchmessern von 10 bis 400 nm.

- Synthetische oder natürliche Aluminiumoxide und - hydroxide.

- Natürliche Silikate, wie Kaolin und andere natürlich vorkommende Kieselsäuren.

- Glasfaser und Glasfaserprodukte (Matten, Stränge) oder Mikroglaskugeln.

Bevorzugt können amorphe Kieselsäuren, hergestellt durch Fällung von Lösungen von Silikaten, mit BET-Oberflächen von 20 bis 400 $m^2/g$ in Mengen von 5 bis 150 Gew.-Teilen, jeweils bezogen auf 100 Teile Kautschuk, eingesetzt werden.

Die genannten Füllstoffe können alleine oder im Gemisch eingesetzt werden. In einer besonders bevorzugten Ausführung des Verfahrens können 10 bis 150 Gew.-Teile helle Füllstoffe, gegebenenfalls zusammen mit 0 bis 100 Gew.-Teilen Ruß, sowie 1 bis 20 Gew.-Teile einer Verbindung der erfindungsgemäßen Organosiliciumverbindungen, jeweils bezogen auf 100 Gew.-Teile Kautschuk, zur Herstellung der Mischungen eingesetzt werden.

Für die Herstellung der erfindungsgemäßen Kautschukmischungen eignen sich neben Naturkautschuk auch Synthesekautschuke. Bevorzugte Synthesekautschuke sind beispielsweise bei W. Hofmann, Kautschuktechnologie, Genter Verlag, Stuttgart 1980, beschrieben. Sie umfassen unter anderem

- Polybutadien (BR)

- Polyisopren (IR)

- Styrol/Butadien-Copolymerisate mit Styrolgehalten von 1 bis 60, vorzugsweise 2 bis 50 Gew.-% (SBR)

- Chloropren (CR)

- Isobutylen/Isopren-Copolymerisate (IIR)

- Butadien/Acrylnitril-Copolymere mit Acrylnitrilgehalten von 5 bis 60, vorzugsweise 10 bis 50 Gew.-% (NBR)

- teilhydrierter oder vollständig hydrierter NBR-Kautschuk (HNBR)

- Ethylen/Propylen/Dien-Copolymerisate (EPDM)

sowie Mischungen dieser Kautschuke. Für die Herstellung von PKW-Reifenlaufflächen sind insbesondere anionisch polymerisierte L-SBR-Kautschuke (Lösungs-SBR) mit einer Glastemperatur oberhalb von -50 °C sowie deren Mischungen mit Dienkautschuken von Interesse.

Die erfindungsgemäßen Kautschukvulkanisate können weitere Kautschukhilfsstoffe enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Kautschukindustrie bekannt sind.

Die Kautschukhilfsmittel können in bekannten Mengen, die sich unter anderem nach dem Verwendungszweck richten, eingesetzt werden. Übliche Mengen sind zum Beispiel Mengen von 0,1 bis 50 Gew.-%, bezogen auf Kautschuk. Als Vernetzer können Schwefel oder schwefelspendende Substanzen eingesetzt werden. Die erfindungsgemäßen Kautschukmischungen können darüber hinaus Vulkanisationsbeschleuniger enthalten. Beispiele für geeignete Vulkanisationsbeschleuniger sind Mercaptobenzthiazole, Sulfenamide, Guanidine, Thiurame, Dithiocarbamate, Thioharnstoffe und Thiocarbonate. Die Vulkanisationsbeschleuniger und Schwefel werden in Mengen von 0,1 bis 10 Gew.-%, bevorzugt 0.1 bis 5 Gew.%, bezogen auf Kautschuk, eingesetzt.

Die Vulkanisation der erfindungsgemäßen Kautschukmischungen kann bei Temperaturen von 100 bis 200 °C, bevorzugt 130 bis 180 °C, gegebenenfalls unter Druck von 10 bis 200 bar erfolgen. Die Abmischung der Kautschuke mit dem Füllstoff, gegebenenfalls Kautschukhilfsmitteln und der erfindungsgemäßen Organosiliciumverbindung kann in bekannten Mischaggregaten, wie Walzen, Innenmischern und Mischextrudern, durchgeführt werden.

Die erfindungsgemäßen Kautschukmischungen können zur Herstellung von Formkörpern, zum Beispiel für die Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen, verwendet werden.

Die erfindungsgemäßen Organosiliciumverbindungen haben den Vorteil, daß kein leicht flüchtiger Alkohol, normalerweise Methanol oder Ethanol, freigesetzt wird und gleichzeitig die Reaktivität gegenüber dem anorganischen Füllstoff weiterhin hoch ist. Die Anbindung des Alkoxysilans an den Füllstoff erfolgt innerhalb einer wirtschaftlich akzeptablen Zeitspanne.

Die nichtflüchtigen, langkettigen Alkohole werden, im Gegensatz zu den flüchtigen, kurzkettigen Alkoholen

des Standes der Technik, ausreichend schnell hydrolysiert und vom Silangrundgerüst abgespalten, so daß während des Mischprozesses eine ausreichende Anbindung der erfindungsgemäßen Organosiliciumverbindungen an den Füllstoff gewährleistet ist. Als Folge ergibt sich in den erfindungsgemäßen Kautschukvulkanisaten eine hohe Verstärkung, wie dies in den nachstehenden Beispielen gezeigt ist.

**Beispiele:**

Beispiel 1: .

Am Rotationsverdampfer werden im 1-Liter-Kolben 119,2 g 3-Mercaptopropyl(triethoxy)silan mit 288,2 g eines Gemisches aus Dodecanol (70 Gew.%) und Tetradecanol (30 Gew.%) und mit 0,12 g Tetrabutylorthotitanat bei 120°C für 240 min erhitzt. Dabei entstehendes Ethanol wird im Vakuum bei 50 bis 120 mbar innerhalb von 240 min abdestilliert. Man erhält nach Abkühlen 349,6 g einer farblosen, höherviskosen Flüssigkeit. Es entstehen bei der Umsetzung mehr als 50 mol% der ethanolfreien Verbindung $(C_{12}H_{25}O/C_{14}H_{29}O)_3Si\text{-}C_3H_6\text{-}SH$, wie durch 1H-und 29Si-NMR gezeigt werden kann. 84 % des Ethanols werden durch die Umsetzung aus dem Organoalkoxysilan entfernt.

Beispiel 2:

Am Rotationsverdampfer werden im 1-Liter-Kolben 119,2g 3-Mercaptopropyl(triethoxy)silan mit 288,2 g eines Gemisches aus Dodecanol (70 Gew.%) und Tetradecanol (30 Gew.%) und mit 0,24 g Tetrabutylorthotitanat bei 120°C für 240 min erhitzt. Dabei entstehendes Ethanol wird im Vakuum bei 50 bis 120 mbar innerhalb von 240 min abdestilliert. Man erhält nach Abkühlen 347,4 g einer farblosen, höherviskosen Flüssigkeit. Es entstehen bei der Umsetzung mehr als 65 mol% der ethanolfreien Verbindung $(C_{12}H_{25}O/C_{14}H_{29}O)\ _3Si\text{-}C_3H_6\text{-}SH$, wie durch 1H-und 29Si-NMR gezeigt werden kann. 90 % des Ethanols werden durch die Umsetzung aus dem Organoalkoxysilan entfernt.

Beispiel 3:

Am Rotationsverdampfer werden im 1-Liter-Kolben 178,8 g 3-Mercaptopropyl(triethoxy)silan mit 435,2 g eines Gemisches aus Dodecanol (70 Gew.%) und Tetradecanol (30 Gew.%) und mit 0,36 g Tetrabutylorthotitanat bei 140°C für 240 min erhitzt. Dabei entstehendes Ethanol wird im Vakuum bei 120 mbar innerhalb von 240 min abdestilliert. Man erhält nach Abkühlen 521,6 g einer farblosen, höherviskosen Flüssigkeit. Es entstehen bei der Umsetzung mehr als 65 mol% der ethanolfreien Verbindung $(C_{12}H_{25}O/C_{14}H_{29}O)_3Si\text{-}C_3H_6\text{-}SH$, wie durch 1H-und 29Si-NMR gezeigt werden kann. 90 % des Ethanols werden durch die Umsetzung aus dem Organoalkoxysilan entfernt.

Beispiel 4:

Am Rotationsverdampfer werden im 1-Liter-Kolben 178,8 g 3-Mercaptopropyl(triethoxy)silan mit 435,2 g eines Gemisches aus Dodecanol (70 Gew.%) und Tetradecanol (30 Gew.%) und mit 0,36 g Tetrabutylorthotitanat bei 140°C für 360 min erhitzt. Dabei entstehendes Ethanol wird im Vakuum bei 120 mbar innerhalb von 360 min abdestilliert. Man erhält nach Abkühlen 522,7 g einer farblosen, höherviskosen Flüssigkeit. Es entstehen bei der Umsetzung mehr als 65 mol% der ethanolfreien Verbindung $(C_{12}H_{25}O/C_{14}H_{29}O)_3Si\text{-}C_3H_6\text{-}SH$, wie durch 1H-und 29Si-NMR gezeigt werden kann. 90 % des Ethanols werden durch die Umsetzung aus dem Organoalkoxysilan entfernt.

Beispiel 5:

Am Rotationsverdampfer werden im 1-Liter-Kolben 119,2 g 3-Mercaptopropyl(triethoxy)silan mit 321,6 g Tetradecanol und 0,12 g Tetrabutylorthotitanat bei 120°C für 150 min erhitzt. Dabei entstehendes Ethanol wird im Vakuum bei 50 bis 120 mbar innerhalb von 150 min abdestilliert. Man erhält nach Abkühlen 388 g einer farblosen, höherviskosen Flüssigkeit. Es entstehen bei der Umsetzung mehr als 25 mol% der ethanolfreien Verbindung $(C_{14}H_{29}O)_3Si\text{-}C_3H_6\text{-}SH$, wie durch 1H-und 29Si-NMR gezeigt werden kann. 75 % des Ethanols werden durch die Umsetzung aus dem Organoalkoxysilan entfernt.

Beispiel 6:

Am Rotationsverdampfer werden im 1-Liter-Kolben 119,2 g 3-Mercaptopropyl(triethoxy)silan mit 321,6 g Tetradecanol und 0,24 g Tetrabutylorthotitanat bei 120°C für 150 min erhitzt. Dabei entstehendes Ethanol wird im Vakuum bei 50 bis 120 mbar innerhalb von 150 min abdestilliert. Man erhält nach Abkühlen 388,7 g einer farblosen, höherviskosen Flüssigkeit. Es entstehen bei der Umsetzung mehr als 25 mol% der ethanolfreien Verbindung

$(C_{14}H_{29}O)_3Si-C_3H_6-SH$, wie durch 1H-und 29Si-NMR gezeigt werden kann. 75 % des Ethanols werden durch die Umsetzung aus dem Organoalkoxysilan entfernt.

Beispiel 7:

Am Rotationsverdampfer werden im 1-Liter-Kolben 200 g Bis[diethoxymethylsilylpropyl]disulfan, $[(EtO)_2(Me)Si-C_3H_6-]_2S_2)$, mit 350,3 g Dodecanol und 0,4 g Tetrabutylorthotitanat bei 115°C für 120 min erhitzt. Dabei entstehendes Ethanol wird im Vakuum bei 50 bis 120 mbar innerhalb von 120 min abdestilliert. Man erhält nach Abkühlen 455,6 g einer farblosen, höherviskosen Flüssigkeit. Es entstehen bei der Umsetzung mehr als 80 mol% der ethanolfreien Verbindung $[(C_{12}H_{25}O)\ _2MeSi-C_3H_6-]\ _2S_2$. wie durch 1H-und 29Si-NMR gezeigt werden kann. 90 % des Ethanols werden durch die Umsetzung aus dem Organoalkoxysilan entfernt.

Beispiel 8:

Am Rotationsverdampfer werden im 1-Liter-Kolben 200 g Bis[diethoxymethylsilylpropyl]disulfan, $[(EtO)_2(Me)Si-C_3H_6-]\ _2S_2)$ , mit 350,3 g Dodecanol und 0,4 g Tetrabutylorthotitanat bei 115°C für 180 min erhitzt. Dabei entstehendes Ethanol wird im Vakuum bei 50 bis 120 mbar innerhalb von 180 min abdestilliert. Man erhält nach Abkühlen 472,2 g einer farblosen, höherviskosen Flüssigkeit. Es entstehen bei der Umsetzung mehr als 80 mol% der ethanolfreien Verbindung $[(C_{12}H_{25}O)_2MeSi-C_3H_6-]_2S_2$, wie durch 1H-und 29Si-NMR gezeigt werden kann. 92 % des Ethanols werden durch die Umsetzung aus dem Organoalkoxysilan entfernt.

Beispiel 9:

Am Rotationsverdampfer werden im 1-Liter-Kolben 200 g Bis[diethoxymethylsilylpropyl]disulfan, $[(EtO)_2(Me)Si-C_3H_6-]_2S_2)$, mit 350,3 g Dodecanol und 0,224 g p-Toluolsulfonsäure bei 115°C für 120 min erhitzt. Dabei entstehendes Ethanol wird im Vakuum bei 50 bis 120 mbar innerhalb von 120 min abdestilliert. Man erhält nach Abkühlen 471,2 g einer farblosen, höherviskosen Flüssigkeit. Es entstehen bei der Umsetzung mehr als 80 mol% der ethanolfreien Verbindung $[(C_{12}H_{25}O)_2MeSi-C_3H_6-]_2S_2$, wie durch 1H-und 29Si-NMR gezeigt werden kann. 92 % des Ethanols werden durch die Umsetzung aus dem Organoalkoxysilan entfernt.

Beispiel 10:

Am Rotationsverdampfer werden im 1-Liter-Kolben 200 g Bis[diethoxymethylsilylpropyl]disulfan, $[(EtO)_2(Me)Si-C_3H_6-]_2S_2)$, mit 350,3 g Dodecanol und 0,224 g p-Toluolsulfonsäure bei 115°C für 180 min erhitzt. Dabei entstehendes Ethanol wird im Vakuum bei 50 bis 120 mbar innerhalb von 180 min abdestilliert. Man erhält nach Abkühlen 472,9 g einer farblosen, höherviskosen. Es entstehen bei der Umsetzung mehr als 80 mol% der ethanolfreien Verbindung $[(C_{12}H_{25}O)_2MeSi-C_3H_6-]_2S_2$, wie durch 1H-und 29Si-NMR gezeigt werden kann. 93 % des Ethanols werden durch die Umsetzung aus dem Organoalkoxysilan entfernt.

Beispiel 11:

In einer Destillationsapparatur werden im 1-Liter-Kolben 159,8 g Bis[triethoxysilylpropyl]tetrasulfan (Si 69) mit 385,9 g Tetradecanol und 0,58 g p-Toluolsulfonsäure bei 95-100°C für 240 min erhitzt. Dabei entstehendes Ethanol wird abdestilliert. Man erhält nach Abkühlen 471,6 g einer gelben, höherviskosen Flüssigkeit. Es entstehen bei der Umsetzung mehr als 65 mol% der ethanolfreien Verbindungen $[(C_{14}H_{29}O)_3Si-C_3H_6-]_2S_x$, wie durch 1H-und 29Si-NMR gezeigt werden kann. 90 % des Ethanols werden durch die Umsetzung aus dem Organoalkoxysilan entfernt.

Beispiel 12:

In einer Destillationsapparatur werden im 1-Liter-Kolben 159,8 g Bis[triethoxysilylpropyl]tetrasulfan (Si 69) mit 335,4 g Dodecanol und 0,58 g p-Toluolsulfonsäure bei 110-120°C für 240 min erhitzt. Dabei entstehendes Ethanol wird abdestilliert. Man erhält nach Abkühlen 413,3 g einer gelben, höherviskosen Flüssigkeit. Es entstehen bei der Umsetzung mehr als 80 mol% der ethanolfreien Verbindungen $[(C_{12}H_{25}O)\ 3Si-C_3H_6-]\ _2S_x$, wie durch 1H-und 29Si-NMR gezeigt werden kann. 96 % des Ethanols werden durch die Umsetzung aus dem Organoalkoxysilan entfernt.

Beispiel 13:

In einer Destillationsapparatur werden im 1-Liter-Kolben 106,51 g Bis[triethoxysilylpropyl]tetrasulfan (Si 69)

mit 257,3 g Tetradecanol und 0,053 g Tetrabutylorthotitanat bei 110°C für 180 min erhitzt. Dabei entstehendes Ethanol wird abdestilliert. Man erhält nach Abkühlen 309,8 g einer gelben, höherviskosen Flüssigkeit. Es entstehen bei der Umsetzung mehr als 65 mol% der ethanolfreien Verbindungen $[(C_{14}H_{29}O)_3Si-C_3H_6-]_2S_x$, wie durch 1H-und 29Si-NMR gezeigt werden kann. 90 % des Ethanols werden durch die Umsetzung aus dem Organoalkoxysilan entfernt.

Beispiel 14:

In einer Destillationsapparatur werden im 1-Liter-Kolben 106,51 g Bis[triethoxysilylpropyl]tetrasulfan (Si 69) mit 257,3 g Tetradecanol und 0,053 g Tetrabutylorthotitanat bei 130°C für 180 min erhitzt. Dabei entstehendes Ethanol wird abdestilliert. Man erhält nach Abkühlen 306,7 g einer gelben, höherviskosen Flüssigkeit. Es entstehen bei der Umsetzung mehr als 80 mol% der ethanolfreien Verbindungen $[(C_{14}H_{29}O)\ _3Si-C_3H_6-]\ _2S_x$, wie durch 1H-und 29Si-NMR gezeigt werden kann. 95 % des Ethanols werden durch die Umsetzung aus dem Organoalkoxysilan entfernt

Beispiel 15:

Am Rotationsverdampfer werden im 1-Liter-Kolben 118,7 g Bis[triethoxysilylpropyl]disulfan (Si 266), mit 321,6 g Tetradecanol und 0,28 g Tetrabutylorthotitanat bei 120°C für 240 min erhitzt. Dabei entstehendes Ethanol wird im Vakuum bei 50 bis 120 mbar innerhalb von 240 min abdestilliert. Man erhält nach Abkühlen 376,1 g einer farblosen, höherviskosen Flüssigkeit. Es entstehen bei der Umsetzung mehr als 80 mol% der ethanolfreien Verbindungen $[(C_{14}H_{29}O)_3Si-C_3H_6-]_2S_x$, wie durch 1H-und 29Si-NMR gezeigt werden kann. 96 % des Ethanols werden durch die Umsetzung aus dem Organoalkoxysilan entfernt.

Beispiel 16:

Am Rotationsverdampfer werden im 1-Liter-Kolben 118,7 g Bis[triethoxysilylpropyl]disulfan (Si 266), mit 321,6 g Tetradecanol und 0,47 g Tetrabutylorthotitanat bei 120°C für 240 min erhitzt. Dabei entstehendes Ethanol wird im Vakuum bei 50 bis 120 mbar innerhalb von 240 min abdestilliert. Man erhält nach Abkühlen 376,0 g einer farblosen, höherviskosen Flüssigkeit. Es entstehen bei der Umsetzung mehr als 80 mol% der ethanolfreien Verbindungen $[(C_{14}H_{29}O)_3Si-C_3H_6-]_2S_x$, wie durch 1H-und 29Si-NMR gezeigt werden kann. 96 % des Ethanols werden durch die Umsetzung aus dem Organoalkoxysilan entfernt.

Beispiel 17:

Am Rotationsverdampfer werden im 1-Liter-Kolben 142,5 g Bis[triethoxysilylpropyl]disulfan (Si 266), mit 335,4 g Dodecanol und 0,29 g Tetrabutylorthotitanat bei 120°C für 240 min erhitzt. Dabei entstehendes Ethanol wird im Vakuum bei 50 bis 120 mbar innerhalb von 240 min abdestilliert. Man erhält nach Abkühlen 403,3 g einer farblosen, höherviskosen Flüssigkeit. Es entstehen bei der Umsetzung mehr als 70 mol% der ethanolfreien Verbindungen $[(C_{12}H_{25}O)\ _3S_1-C_3H_6-]\ _2S_x$, wie durch 1H-und 29Si-NMR gezeigt werden kann. 93 % des Ethanols werden durch die Umsetzung aus dem Organoalkoxysilan entfernt.

Beispiel 18:

Am Rotationsverdampfer werden im 1-Liter-Kolben 142,5 g Bis[triethoxysilylpropyl]disulfan (Si 266), mit 335,4 g Dodecanol und 0,58 g Tetrabutylorthotitanat bei 120°C für 240 min erhitzt. Dabei entstehendes Ethanol wird im Vakuum bei 50 bis 120 mbar innerhalb von 240 min abdestilliert. Man erhält nach Abkühlen 403,1 g einer farblosen, höherviskosen Flüssigkeit. Es entstehen bei der Umsetzung mehr als 75 mol% der ethanolfreien Verbindungen $[(C_{12}H_{25}O)\ _3Si-C_3H_6-]\ _2S_x$, wie durch 1H-und 29Si-NMR gezeigt werden kann. 94 % des Ethanols werden durch die Umsetzung aus dem Organoalkoxysilan entfernt.

Beispiel 19:

Am Rotationsverdampfer werden im 1-Liter-Kolben 95 g Bis[triethoxysilylpropyl]disulfan (Si 266), mit 257,3 g Tetradecanol und 0,38 g Tetrabutylorthotitanat bei 120°C für 150 min erhitzt. Dabei entstehendes Ethanol wird im Vakuum bei 50 bis 120 mbar innerhalb von 150 min abdestilliert. Man erhält nach Abkühlen 301,6 g einer farblosen, höherviskosen Flüssigkeit. Es entstehen bei der Umsetzung mehr als 70 mol% der ethanolfreien Verbindungen $[(C_{14}H_{29}O)\ _3Si-C_3H_6-]_2S_x$, wie durch 1H-und 29Si-NMR gezeigt werden kann. 92 % des Ethanols werden durch die Umsetzung aus dem Organoalkoxysilan entfernt.

Beispiel 20:

Am Rotationsverdampfer werden im 100 ml Kolben 13,9 g 1-Mercaptomethyl(triethoxysilan) mit 38,4 g eines Gemisches aus Dodecanol (70 Gew.%) und Tetradecanol (30 Gew.%) und 0,1 g Tetrabutylorthotitanat bei 100°C für 240 min erhitzt. Dabei entstehendes Ethanol wird im Vakuum bei 500 bis 250 mbar innerhalb von 240 min abdestilliert. Man erhält nach Abkühlen 44,1 g einer farblosen Flüssigkeit. Es entstehen bei der Umsetzung mehr als 50 mol% der ethanolfreien Verbindung $(C_{12}H_{25}O/C_{14}H_{29}O)_3Si\text{-}CH_2\text{-}SH$, wie durch 1H-und 29Si-NMR gezeigt werden kann. 85 % des Ethanols werden durch die Umsetzung aus dem Organoalkoxysilan entfernt.

Beispiel 21:

Am Rotationsverdampfer werden im 0,5-Liter-Kolben 50 g 1-Mercaptomethyl(dimethylethoxysilan) mit 61,5 g Dodecanol und 0,12 g Tetrabutylorthotitanat bei 90°C für 240 min erhitzt. Dabei entstehendes Ethanol wird im Vakuum bei 550 bis 250 mbar innerhalb von 240 min abdestilliert. Man erhält nach Abkühlen 104,5 g einer farblosen Flüssigkeit. Es entstehen bei der Umsetzung mehr als 65 mol% der ethanolfreien Verbindung $(C_{12}H_{25}O)$ $Me_2Si\text{-}CH_2\text{-}SH$, wie durch 1H-und 29Si-NMR gezeigt werden kann. 70 % des Ethanols werden durch die Umsetzung aus dem Organoalkoxysilan entfernt.

Beispiel 22:

Am Rotationsverdampfer werden im 1-Liter-Kolben 60 g 1-Mercaptopropyl(dimethylethoxysilan) mit 71,4 g Tetradecanol und 0,1 g Tetrabutylorthotitanat bei 120°C für 240 min erhitzt. Dabei entstehendes Ethanol wird im Vakuum bei 150 bis 300 mbar innerhalb von 240 min abdestilliert. Man erhält nach Abkühlen 113,6 g einer farblosen Flüssigkeit. Es entstehen bei der Umsetzung mehr als 70 mol% der ethanolfreien Verbindung $(C_{14}H_{29}O)$ $Me_2Si\text{-}C_3H_6\text{-}SH$, wie durch 1H-und 29Si-NMR gezeigt werden kann. 72 % des Ethanols werden durch die Umsetzung aus dem Organoalkoxysilan entfernt.

**Beispiel 23:**

Gummitechnische Untersuchungen der Organosiliciumverbindungen aus den Beispielen 9 und 17

Die für die Kautschukmischungen verwendete Rezeptur ist in der folgenden Tabelle 1 angegeben. Dabei bedeutet die Einheit phr Gewichtsanteile, bezogen auf 100 Teile des eingesetzten Rohkautschuks. Die erfindungsgemäßen Silane werden equimolar zur Referenz Si 266 bezogen auf Silicium dosiert. Das allgemeine Verfahren zur Herstellung von Kautschukmischungen und deren Vulkanisate ist in dem Buch: "Rubber Technology Handbook", W. Hofmann, Hanser Verlag 1994 beschrieben.

Tabelle 1

| Substanz | Mischung 1 Referenz [phr] | Mischung 2 [phr] | Mischung 3 [phr] |
|---|---|---|---|
| **1. Stufe** | | | |
| Buna VSL 5025-1 | 96 | 96 | 96 |
| Buna CB 24 | 30 | 30 | 30 |
| Ultrasil 7000 GR | 80 | 80 | 80 |
| Si 266 | 5,8 | -- | -- |
| Beispiel 9 | -- | 11,2 | -- |
| Beispiel 17 | -- | -- | 15 |
| ZnO | 3 | 3 | 3 |
| Stearinsäure | 2 | 2 | 2 |
| Naftolen ZD | 10 | 10 | 10 |
| Vulkanox 4020 | 1,5 | 1,5 | 1,5 |
| Protektor G 3108 | 1 | 1 | 1 |

Tabelle 1 (fortgesetzt)

| Substanz | Mischung 1 Referenz [phr] | Mischung 2 [phr] | Mischung 3 [phr] |
|---|---|---|---|
| **2. Stufe** | | | |
| Batch Stufe 1 | | | |
| **3. Stufe** | | | |
| Batch Stufe 2 | | | |
| Vulkacit D<br>Vulkacit CZ<br>Perkacit TBzTD | 2<br>1,5<br>0,2 | 2<br>1,5<br>0,2 | 2<br>1,5<br>0,2 |
| Schwefel | 2,1 | 2,1 | 2,1 |

Bei dem Polymer VSL 5025-1 handelt es sich um ein in Lösung polymerisiertes SBR-Copolymer der Bayer AG mit einem Styrolgehalt von 25 Gew.-%, einem Vinylgehalt von 50 Gew.-%, einem cis 1,4-Gehalt von 10 Gew.-% und einem trans 1,4-Gehalt von 15 Gew.-%. Das Copolymer enthält 37,5 phr Öl und weist eine Mooney-Viskosität (ML 1+4/100°C) von 50 ±4 auf.

Bei dem Polymer Buna CB 24 handelt es sich um ein cis 1,4-Polybutadien (Neodymtyp) der Bayer AG mit einem cis 1,4-Gehalt von 97 %, einem trans 1,4-Gehalt von 2 %, einem 1,2-Gehalt von 1 % und einer Mooney-Viskosität von 44 ±5.

Als aromatisches Öl wird Naftolen ZD der Chemetall verwendet. Bei Vulkanox 4020 handelt es sich um 6PPD der Bayer AG und Protektor G 3108 ist ein Ozonschutzwachs von Parameit B.V.. Vulkacit D (DPG) und Vulkacit CZ (CBS) sind Handelsprodukte der Bayer AG, Perkacit TBzTD (Tetrabenzylthiuramdisulfid) ein Produkt von Flexsys N.V..

Das Kopplungsreagenz Si 266, ein Bis-(triethoxysilylpropyl)disulfid ist ein Produkt der Degussa AG. Ultrasil 7000 GR ist eine granulierte, leicht dispergierbare gefällte Kieselsäure der Degussa AG mit einer BET Oberfläche von 170 $m^2$/g.

Die Kautschukmischungen werden in einem Innenmischer entsprechend der Mischvorschrift in Tabelle 2 hergestellt.

Tabelle 2

| Stufe 1 | |
|---|---|
| Einstellungen | |
| Mischaggregat | Werner & Pfleiderer E-Typ |
| Drehzahl | 60 $min^{-1}$ |
| Stempeldruck | 5,5 bar |
| Leervolumen | 1,58 L |
| Füllgrad | 0,58 |
| Durchflußtemp. | 70 °C |
| Mischvorgang | |
| 0 bis 1 min | Buna VSL 5025-1 + Buna CB 24 |
| 1 bis 3 min | 1/2 Kieselsäure, ZnO, Stearinsäure, Naftolen ZD, Silan |
| 3 bis 4 min | 1/2 Kieselsäure, Vulkanox, Protektor |
| 4 min | Säubern |
| 4 bis 5 min | Mischen |
| 5 min | Lüften |
| 5 bis 6 min | Mischen und ausfahren |
| Batch-Temp. | 145-155°C |
| Lagerung | 24 h bei Raumtemperatur |

| Stufe 2 | |
|---|---|
| Einstellungen | |
| Mischaggregat | Wie in Stufe 1 bis auf: |
| Drehzahl. | 70 $min^{-1}$ |
| Füllgrad | 0,54 |
| Mischvorgang | |
| 0 bis 2 min | Batch Stufe 1 aufbrechen |
| 2 bis 5 min | Batchtemperatur 155°C durch Drehzahlvariation halten |
| 5 min | Ausfahren |
| Batch-Temp. | 155°C |
| Lagerung | 4 h bei Raumtemperatur |

| Stufe 3 | |
|---|---|
| Einstellungen | |
| Mischaggregat | wie in Stufe 1 bis auf |
| Drehzahl | 40 $min^{-1}$ |
| Füllgrad | 0,51 |
| Durchflußtemp. | 50 °C |
| Mischvorgang | |
| 0 bis 2 min | Batch Stufe 2, Beschleuniger, Schwefel |
| 2 min | ausfahren und auf Labormischwalzwerk Fell bilden (Durchmesser 200 mm, Länge 450 mm, Durchflußtemperatur 50°C)<br><br>Homogenisieren:<br>3* links, 3* rechts einschneiden und 8* bei engem Walzenspalt (1 mm) und 3* bei weitem Walzenspalt (3,5 mm) Fell ausziehen. |
| Batch-Temp. | 85-95°C |

In Tabelle 3 sind die Methoden für die Gummitestung zusammengestellt.

Tabelle 3

| Physikalische Testung | Norm/Bedingungen |
|---|---|
| ML 1+4, 100°C, 3. Stufe | DIN 53523/3, ISO 667 |
| Vulkameterprüfung, 165°C<br>t10% (min) | DIN 53529/3, ISO 6502 |
| Zugversuch am Ring, 23°C<br>Zugfestigkeit (MPa)<br>Spannungswerte (MPa)<br>Bruchdehnung (%) | DIN 53504, ISO 37 |
| Shore-A-Härte, 23°C (SH) | DIN 53 505 |
| Viskoelastische Eigenschaften, 0 bis 60°C, 16 Hz, 50 N Vorkraft und 25 N Amplitudenkraft<br>Komplexer Modul E* (MPa)<br>Verlustfaktor tan δ (-) | DIN 53 513, ISO 2856 |

Die Tabelle 4 zeigt die Ergebnisse der gummitechnischen Prüfung. Die Mischungen werden 20 min bei 165°C vulkanisiert.

Tabelle 4

| **Rohmischungsdaten** | **Einheit** | **Mischung 1 (Referenz)** | **Mischung 2** | **Mischung 3** |
|---|---|---|---|---|
| ML 1+4 | [-] | 60 | 45 | 42 |
| t10% | [min] | 2,2 | 2,5 | 2,9 |
| **Vulkanisatdaten** | **Einheit** | **Mischung 1 (Referenz)** | **Mischung 2** | **Mischung 3** |
| Zugfestigkeit | [MPa] | 12,6 | 10,9 | 12,1 |
| Spannungswert 100% | [MPa] | 2,1 | 1,2 | 1,1 |
| Spannungswert 300% | [MPa] | 10,4 | 5,8 | 5,6 |
| Spannungswert 300 % / 100 % | [-] | 5,0 | 4,8 | 5,1 |
| Bruchdehnung | [%] | 340 | 440 | 490 |
| Shore-A-Härte | [-] | 64 | 54 | 52 |
| E* (60°C) | [MPa] | 8,8 | 5,6 | 5,3 |
| E* (0°C) | [MPa] | 24,2 | 9,2 | 8,4 |
| tan δ (60°C) | [-] | 0,103 | 0,095 | 0,091 |

Wie man anhand der Daten in der Tabelle 4 erkennen kann, liegen die Mooney-Viskositäten der Mischungen 2 und 3 mit den erfindungsgemäßen Silanen unter dem Niveau der Referenzmischung 1. Daraus ergibt sich eine leichtere Verarbeitbarkeit (z.B. bei Extrusion) der Mischungen. Es sind des weiteren höhere t10%-Werte im Vergleich zur Referenz zu verzeichnen. Dadurch ergibt sich eine verbesserte Verarbeitungssicherheit, da eine Vorvernetzung verzögert wird. Der Verstärkungsfaktor (Spannungswert 300% / 100%) und die Zugfestigkeit liegen für die Mischungen 2, 3 auf hohem Niveau bei deutlich höheren Bruchdehnungen im Vergleich zu der Referenzmischung 1. Die Mischungen mit den erfindungsgemäßen Silanen zeichnen sich im Vergleich zu ihrer Referenz-Mischung 1 insbesondere durch eine niedrigere dynamische Steifigkeit (E*) bei 0 °C aus. Daher sind bei diesen Mischungen deutlich bessere Winter- und Naßrutscheigenschaften bei der Verwendung als Lauffläche zu erwarten. Zusätzlich besitzen diese Mischungen einen reduzierten tan δ 60 °C und damit einen reduzierten Rollwiderstand, der bei Verwendung als Lauffläche in einen geringeren Kraftstoffverbrauch resultiert.
Somit ergibt sich für Mischungen mit den erfindungsgemäßen Silanen eine deutliche Verbesserung der gummitechnischen Eigenschaften im Vergleich zu den handelsüblichen Silanen. Dies bedeutet, daß überraschenderweise trotz der Anwesenheit der im Vergleich zu den üblichen Methoxy- und Ethoxygruppen erheblich längerkettigen Alkoxygruppen eine sehr gute Anbindung an die Kieselsäure und das Polymer stattfindet.
Durch die Verwendung dieser Silane wird die Emission flüchtiger Kohlenwasserstoffe im Vergleich zur Referenz deutlich verringert, da anstelle von Ethoxygruppen langkettige Alkoxygruppen mit hohem Siedepunkt als Abgangsgruppen vorliegen. Die Siedepunkte der durch Hydrolyse des Silans entstehenden langkettigen Alkohole liegen oberhalb der Verarbeitungs- und Vulkanisationstemperaturen. Dadurch verbleiben diese in der Rohmischung und dem Vulkanisat und werden nicht in die Umwelt abgegeben.

Beispiel 24:

Gummitechnische Untersuchungen der Organosiliciumverbindung aus dem Beispiel 3

Die für die Kautschukmischungen verwendete Rezeptur ist in der folgenden Tabelle 5 angegeben. Dabei bedeutet die Einheit phr Gewichtsanteile, bezogen auf 100 Teile des eingesetzten Rohkautschuks. Das erfindungsgemäße Silan wurde gewichtsgleich zu den Referenzen Si 69 und Si 266 dosiert. Die durchgeführte Schwefelanpassung ist u.a. notwendig, um den geringeren Schwefelgehalt des Versuchssilans zu kompensieren. Das allgemeine Verfahren zur Herstellung von Kautschukmischungen und deren Vulkanisate ist in dem Buch: "Rubber Technology Handbook",

W. Hofmann, Hanser Verlag 1994 beschrieben.

Tabelle 5

| Substanz | Mischung 4 Referenz [phr] | Mischung 5 Referenz [phr] | Mischung 6 [phr] |
|---|---|---|---|
| **1. Stufe** | | | |
| Buna VSL 5025-1 | 96 | 96 | 96 |
| Buna CB 24 | 30 | 30 | 30 |
| Ultrasil 7000 GR | 80 | 80 | 80 |
| Si 69 | 6,4 | -- | -- |
| Si 266 | -- | 6,4 | -- |
| Beispiel 3 | -- | -- | 6,4 |
| ZnO | 3 | 3 | 3 |
| Stearinsäure | 2 | 2 | 2 |
| Naftolen ZD | 10 | 10 | 10 |
| Vulkanox 4020 | 1,5 | 1,5 | 1,5 |
| Protektor G 3108 | 1 | 1 | 1 |
| **2. Stufe** | | | |
| Batch Stufe 1 | | | |
| **3. Stufe** | | | |
| Batch Stufe 2 | | | |
| Vulkacit D | 2 | 2 | 2 |
| Vulkacit CZ | 1,5 | 1,5 | 1,5 |
| Perkacit TBzTD | 0,2 | 0,2 | 0,2 |
| Schwefel | 1,5 | 2,1 | 2,2 |

Das Kopplungsreagenz Si 69, ein Bis-(triethoxysilylpropyl)tetrasulfid, und Si 266, ein Bis-(triethoxy-silylpropyl) disulfid, sind Produkte der Degussa AG.

Die Kautschukmischungen werden in einem Innenmischer entsprechend der Mischvorschrift in Tabelle 6 hergestellt.

Tabelle 6

| Stufe 1 | |
|---|---|
| **Einstellungen** | |
| Mischaggregat | Werner & Pfleiderer E-Typ |
| Drehzahl | 60 $min^{-1}$ |
| Stempeldruck | 5,5 bar |
| Leervolumen | 1,58 L |
| Füllgrad | 0,56 |
| Durchflußtemp. | 70 °C |
| **Mischvorgang** | |
| 0 bis 1 min | Buna VSL 5025-1 + Buna CB 24 |
| 1 bis 3 min | 1/2 Kieselsäure, ZnO, Stearinsäure, Naftolen ZD, Silan |
| 3 bis 4 min | 1/2 Kieselsäure, Vulkanox, Protektor |
| 4 min | Säubern |
| 4 bis 5 min | Mischen |
| 5 min | Lüften |
| 5 bis 6 min | Mischen und ausfahren |
| Batch-Temp. | 145-155°C |
| Lagerung | 24 h bei Raumtemperatur |

| Stufe 2 | |
|---|---|
| **Einstellungen** | |
| Mischaggregat | Wie in Stufe 1 bis auf: |
| Drehzahl. | 70 $min^{-1}$ |
| Füllgrad | 0,53 |
| **Mischvorgang** | |
| 0 bis 2 min | Batch Stufe 1 aufbrechen |
| 2 bis 5 min | Batchtemperatur 150°C durch Drehzahlvariation halten |
| 5 min | Ausfahren |
| Batch-Temp. | 150°C |
| Lagerung | 4 h bei Raumtemperatur |

| Stufe 3 | |
|---|---|
| Einstellungen | |
| Mischaggregat | wie in Stufe 1 bis auf |
| Drehzahl | 40 $min^{-1}$ |
| Füllgrad | 0,50 |
| Durchflußtemp. | 50 °C |
| Mischvorgang | |
| 0 bis 2 min | Batch Stufe 2, Beschleuniger, Schwefel |
| 2 min | ausfahren und auf Labormischwalzwerk Fell bilden<br>(Durchmesser 200 mm, Länge 450 mm, Durchflußtemperatur 50°C)<br><br>Homogenisieren:<br>3* links, 3* rechts einschneiden und 8* bei engem Walzenspalt (1 mm) und 3* bei weitem Walzenspalt (3,5 mm) Fell ausziehen. |
| Batch-Temp. | 85-95°C |

In Tabelle 7 sind die Methoden für die Gummitestung zusammengestellt.

Tabelle 7

| Physikalische Testung | Norm/Bedingungen |
|---|---|
| ML 1+4, 100°C, 3. Stufe | DIN 53523/3, ISO 667 |
| Vulkameterprüfung, 165°C<br>Dmax-Dmin (dNm)<br>t10% und t90% (min) | DIN 53529/3, ISO 6502 |
| Zugversuch am Ring, 23°C<br>Zugfestigkeit (MPa)<br>Spannungswerte (MPa)<br>Bruchdehnung (%) | DIN 53504, ISO 37 |
| Shore-A-Härte, 23°C (SH) | DIN 53 505 |
| Viskoelastische Eigenschaften, 0 bis 60°C, 16 Hz, 50 N Vorkraft und 25 N Amplitudenkraft<br>Komplexer Modul E* (MPa)<br>Verlustfaktor tan δ (-) | DIN 53 513, ISO 2856 |
| DIN-Abrieb, 10 N Kraft ($mm^3$) | DIN 53 516 |

Tabelle 7 (fortgesetzt)

| Physikalische Testung | Norm/Bedingungen |
|---|---|
| Ball Rebound, 60°C (%) | ASTM D 5308 |
| Goodrich-Flexometertest, 0,250 inch Hub, 25 min, 23 °C<br>Kontakttemperatur (°C)<br>Einstichtemperatur (°C)<br>Permanent Set (%) | DIN 53533, ASTM D 623 A |

Die Tabelle 8 zeigt die Ergebnisse der gummitechnischen Prüfung. Die Mischungen werden 25 min bei 165°C vulkanisiert.

Tabelle 8

| **Rohmischungsdaten** | **Einheit** | **Mischung 4 (Referenz)** | **Mischung 5 (Referenz)** | **Mischung 6** |
|---|---|---|---|---|
| ML 1+4 | [-] | 66 | 63 | 54 |
| Dmax-Dmin | [dNm] | 15,5 | 16,5 | 13,2 |
| t10% | [min] | 1, 8 | 2, 5 | 1, 0 |
| **Vulkanisatdaten** | **Einheit** | **Mischung 4 (Referenz)** | **Mischung 5 (Referenz)** | **Mischung 6** |
| Zugfestigkeit | [MPa] | 14,5 | 13, 0 | 14,1 |
| Spannungswert 100% | [MPa] | 1,8 | 1,9 | 1,7 |
| Spannungswert 300% | [MPa] | 10,5 | 10,4 | 12,2 |
| Spannungswert 300 % / 100 % | | 5,8 | 5,5 | 7,2 |
| Bruchdehnung | [%] | 360 | 350 | 320 |
| Shore-A-Härte | [-] | 60 | 62 | 55 |
| Ball Rebound | [%] | 68,6 | 67,6 | 75,5 |
| Kontakttemperatur | [°C] | 62 | 61 | 55 |
| Einstichtemperatur | [°C] | 101 | 97 | 88 |
| Permanent Set | [%] | 2,8 | 2,6 | 2,0 |
| E* (60°C) | [MPa] | 6,9 | 6,9 | 5,8 |
| E* (0°C) | [MPa] | 14,8 | 16,8 | 8,9 |
| tan δ (60°C) | [-] | 0,089 | 0,086 | 0,062 |
| DIN-Abrieb | [$mm^3$] | 69 | 68 | 47 |

Wie man anhand der Daten in der Tabelle 8 erkennen kann, liegt die Mooney-Viskosität der Mischung 6 mit dem erfindungsgemäßen Silan deutlich unter dem Niveau der Referenzmischungen 4 und 5. Dadurch ergibt sich hier analog zum Beispiel 23 eine bessere Verarbeitbarkeit der Rohmischung.
Im Bereich der statischen Vulkanisatdaten sind die Zugfestigkeiten und Bruchdehnungen auf vergleichbarem Niveau, während die Mischung 6 mit dem erfindungsgemäßen Silan eine deutlich höhere Verstärkung aufweist. Dies erkennt man am höheren Spannungswert bei 300% Dehnung und dem viel höheren Verstärkungsfaktor (Spannungswert 300% / 100%). Daran ist die sehr hohe Kieselsäure-Silan-Kautschukanbindung zu erkennen.
Im Vergleich der Ergebnisse des Goodrich-Flexometer Tests schneidet die Mischung 6 mit dem erfindungsgemäßen Silan besser ab als die Referenzen, weil sie einen geringeren Wärmeaufbau bei dynamischer Belastung und eine niedrigere dauerhafte Verformung aufweist. Ein niedriger Wärmeaufbau ist vorteilhaft für eine hohe Lebensdauer einer dynamisch belasteten Reifenlauffläche.

Ebenso wie im vorherigen Beispiel gezeigt, besitzt die Mischung mit dem erfindungsgemäßen Silan eine niedrigere dynamische Steifigkeit E* bei 0 °C als die Referenzen. Dies bedeutet besseres Naßrutschverhalten und Wintereigenschaften. Ebenso ist auch der tan δ bei 60 °C deutlich niedriger als bei den beiden Referenzen, womit auch der Rollwiderstand erniedrigt ist.
Zusätzlich zu diesen positiven Eigenschaften ist auch der DIN-Abrieb der Mischung mit dem erfindungsgemäßen Silan erheblich abgesenkt. Damit wird gezeigt, daß durch die Verwendung des erfindungsgemäßen Silans in einer Laufflächen-Mischung die wichtigsten Eigenschaften eines Reifens, nämlich Abrieb, Naßrutschen und Rollwiderstand signifikant verbessert werden.
Insgesamt zeigt sich, daß bei der Verwendung der erfindungsgemäßen Silane nicht nur die Emission flüchtiger Kohlenwasserstoffe bei der Verarbeitung der Mischungen verringert wird, sondern überraschenderweise auch die gummitechnischen Eigenschaften verbessert werden.

Beispiel 25:

Am Rotationsverdampfer werden im 1-Liter-Kolben 250 g Bis[triethoxysilylpropyl]tetrasulfan (Si 69) mit 682,9 g Hexadecanol sowie mit 1 g Tetrabutylorthotitanat bei 120°C für 270 min erhitzt. Das Silan wird nach dem Aufschmelzen der Alkoholmischung bei 100°C zugesetzt. Bei der Umesterung entstehendes Ethanol wird im Vakuum bei 20-800 mbar innerhalb von 270 min abdestilliert. Man erhält nach Abkühlen 801,2 g eines hellgelben, wachsartigen Feststoffes. Es entstehen bei der Umsetzung mehr als 89 mol% der ethanolfreien Verbindungen $[(C_{16}H_{33}O)_3Si-C_3H_6-]_2S_x$, wie durch 1H-und 29Si-NMR gezeigt werden kann. 95 % des Ethanols werden durch die Umsetzung aus dem Produkt entfernt.

Beispiel 26:

Am Rotationsverdampfer werden im 1-Liter-Kolben 250 g Bis[triethoxysilylpropyl]disulfan (die mittlere Kettenlänge der Polysulfanketten $R-S_x-R$ mit $S_2-S_{10}$ ist 2,0; nachgewiesen durch HPLC + NMR) mit 766,6 g Hexadecanol sowie mit 1 g Tetrabutylorthotitanat bei 120-140°C erhitzt. Das Silan wird nach dem Aufschmelzen der Alkoholmischung bei 110°C zugesetzt. Bei der Umesterung entstehendes Ethanol wird im Vakuum bei 20-800 mbar innerhalb von 300 min abdestilliert. Man erhält nach Abkühlen 873,2 g eines wachsartigen Feststoffes. Es entstehen bei der Umsetzung mehr als 76 mol% der ethanolfreien Verbindung $[(C_{16}H_{33}O)_3Si-C_3H_6-]_2S_2$, wie durch 1H-und 29Si-NMR gezeigt werden kann. 94 % des Ethanols werden durch die Umsetzung aus dem Produkt entfernt.

Beispiel 27:

Am Rotationsverdampfer werden im 1-Liter-Kolben 250 g Bis[triethoxysilylpropyl]disulfan (die mittlere Kettenlänge der Polysulfanketten $R-S_x-R$ mit $S_2-S_{10}$ ist 2,0; nachgewiesen durch HPLC + NMR) mit einer Mischung aus 79,3 g Tetradecanol (10 Gew.%), 357,1 g Hexadecanol (45 Gew.%) und 357,1 g Octadecanol (45 Gew.%) sowie mit 1 g Tetrabutylorthotitanat bei 135°C erhitzt. Das Silan wird nach dem Aufschmelzen der Alkoholmischung bei 90°C zugesetzt. Bei der Umesterung entstehendes Ethanol wird im Vakuum bei 20-800 mbar innerhalb von 285 min abdestilliert. Man erhält nach Abkühlen 901,9 g eines wachsartigen Produktes. Es entstehen bei der Umsetzung mehr als 77 mol% der ethanolfreien Verbindungen $[(C_{14}H_{29}O/C_{16}H_{33}O/C_{18}H_{37}O)\ _3Si-C_3H_6-)\ _2S_2$, wie durch 1H-und 29Si-NMR gezeigt werden kann. Die Verteilung der Alkohole in den Silanverbindungen ist statistisch. 94 % des Ethanols werden durch die Umsetzung aus Bis[triethoxysilylpropyl]disulfan entfernt.

Beispiel 28:

Am Rotationsverdampfer werden im 1-Liter-Kolben 250 g 3-Mercaptopropyl(triethoxy)silan mit einer Mischung aus 79,5 g Tetradecanol (10 Gew.%), 355,7 g Hexadecanol (45 Gew.%) und 355,7 g Octadecanol (45 Gew.%) sowie mit 1 g Tetrabutylorthotitanat bei 130-140°C erhitzt. Das Silan wird nach dem Aufschmelzen der Alkoholmischung bei 105°C zugesetzt. Bei der Umesterung entstehendes Ethanol wird im Vakuum bei 20-800 mbar innerhalb von 270 min abdestilliert. Man erhält nach Abkühlen 897,9 g eines farblosen, wachsartigen Feststoffes. Es entstehen bei der Umsetzung mehr als 88 mol% der ethanolfreien Verbindungen $(C_{14}H_{29}O/C_{16}H_{33}O/C_{18}H_{37}O)_3Si-C_3H_6-SH$, wie durch 1H-und 29Si-NMR gezeigt werden kann. Die Verteilung der Alkhole in den Silanverbindungen ist statistisch. 96 % des Ethanols werden durch die Umsetzung aus 3-Mercaptopropyl(triethoxy)silan entfernt.

Vergleichsbeispiel 29 (analog EP 1394167 A1):

Am Rotationsverdampfer werden im Kolben 96,6 g Bis[triethoxysilylpropyl]tetrasulfan (Si 69) mit 186,6 g eines

Gemisches aus Hexadecanol und Octadecanol (Stenol 1618; Cognis) sowie mit 0,05 g Tetrabutylorthotitanat bei 110°C erhitzt. Das Silan wird nach dem Aufschmelzen der Alkoholmischung bei 100°C zugesetzt. Bei der Umesterung entstehendes Ethanol wird im Vakuum bei 20-800 mbar innerhalb von 210 min abdestilliert. Man erhält nach Abkühlen 226,6 g eines gelben, wachsartigen Feststoffes. Wie durch 1H-und 29Si-NMR gezeigt werden kann, sind 70% der EtO-Si Gruppen durch R-O-Si ersetzt.

Vergleichsbeispiel 30 (analog EP 1394167 A1):

Am Rotationsverdampfer werden im Kolben 239,4 g Bis[triethoxysilylpropyl]disulfan (Si 266 der Degussa AG, mit einer durch HPLC und NMR nachweisbaren Schwefelkettenverteilung $S_x$ mit x = 2-10 von 2,25) mit 385,8 g eines Gemisches aus Dodecanol und Tetradecanol (Lorol Spezial; Cognis) sowie mit 0,12 g Tetrabutylorthotitanat bei 110°C erhitzt. Bei der Umesterung entstehendes Ethanol wird im Vakuum bei 20-800 mbar innerhalb von 240 min abdestilliert. Man erhält nach Abkühlen 532,2 g einer blaßgelben, hochviskosen Flüssigkeit. Wie durch 1H-und 29Si-NMR gezeigt werden kann, sind 68% der EtO-Si Gruppen durch R-O-Si ersetzt.

Vergleichsbeispiel 31:

In einer Destillationsapparatur werden im 10-Liter-Kolben 2925 g 3-Mercaptopropyl(triethoxy)silan mit 4753 g eines Gemisches aus Tetradecanol und Dodecanol (Lorol Spezial, Cognis) sowie mit 1,4 g Tetrabutylorthotitanat bei 110-115°C erhitzt. Bei der Umesterung entstehendes Ethanol wird im Vakuum bei 50-800 mbar abdestilliert. Man erhält nach Abkühlen 6470 g eines farblosen, hochviskosen Poduktes. Wie zum Beispiel durch 1H-und 29Si-NMR gezeigt werden kann, ist die Verteilung der OR-Substituenten in den Silanverbindungen rein statistisch. Wie durch 1H-und 29Si-NMR gezeigt werden kann, sind 68% der EtO-Si Gruppen durch R-O-Si ersetzt.

Beispiel 32:

In einer Destillationsapparatur werden im 10-Liter-Kolben 2503,2 g 3-Mercaptopropyl(triethoxy)silan mit 6106,6 g eines Gemisches aus Tetradecanol und Dodecanol (Lorol Spezial, Cognis) sowie mit 5 g Tetrabutylorthotitanat bei 105-110°C für 380 min erhitzt. Bei der Umesterung entstehendes Ethanol wird im Vakuum bei 15-600 mbar abdestilliert. Man erhält nach Abkühlen 7183 g eines farblosen, hochviskosen Poduktes. Wie durch 1H-und 29Si-NMR gezeigt werden kann, sind 97% der EtO-Si Gruppen durch R-O-Si ersetzt Es sind bei der Umsetzung mehr als 92 mol% der ethanolfreien Verbindungen $(C_{12}H_{25}O/C_{14}H_{29}O)_3Si-C_3H_6-SH$ entstanden, wie zum Beispiel durch 1H-und 29Si-NMR gezeigt werden kann. Die Verteilung der Alkhole in den Silanverbindungen ist rein statistisch.

Beispiel 33:

In einer Destillationsapparatur werden im 10-Liter-Kolben 2002,6 g 3-Mercaptopropyl(triethoxy)silan mit 6108,5 g Hexadecanol sowie mit 2 g Tetrabutylorthotitanat vermischt und bei 95-115°C für 360 min erhitzt. Bei der Umesterung entstehendes Ethanol wird im Vakuum bei 15-600 mbar abdestilliert. Man erhält nach Abkühlen 7022 g eines farblosen, festen Poduktes. Wie durch 1H-und 29Si-NMR gezeigt werden kann, sind 92% der EtO-Si Gruppen durch R-O-Si ersetzt. Es sind bei der Umsetzung mehr als 80 mol% der ethanolfreien Verbindung $(C_{16}H_{33}O)_3Si-C_3H_6-SH$ entstanden, wie zum Beispiel durch 1H-und 29Si-NMR gezeigt werden kann.

Beispiel 34:

Gummitechnische Untersuchungen der Organosiliciumverbindungen aus den Beispielen 25, 26 und 27.

Die für die Kautschukmischungen verwendete Rezeptur ist in der folgenden Tabelle 9 angegeben. Dabei bedeutet die Einheit phr Gewichtsanteile, bezogen auf 100 Teile des eingesetzten Rohkautschuks. Die erfindungsgemäßen Silane werden equimolar zu 6,4 phr Si 69 bezogen auf Silizium dosiert. Die Schwefeldosierung wird so angepasst, daß der in der Mischung vorliegende freie Schwefelanteil gleich ist. Das allgemeine Verfahren zur Herstellung von Kautschukmischungen und deren Vulkanisate ist in dem Buch: "Rubber Technology Handbook", W. Hofmann, Hanser Verlag 1994 beschrieben.

Tabelle 9

| Substanz | Mischung 7 Referenz [phr] | Mischung 8 [phr] | Mischung 9 [phr] | Mischung 10 [phr] |
|---|---|---|---|---|
| **1. Stufe** | | | | |
| Buna VSL 5025-1 | 96 | 96 | 96 | 96 |
| Buna CB 24 | 30 | 30 | 30 | 30 |
| Ultrasil 7000 GR | 80 | 80 | 80 | 80 |
| Si 69 | 6,4 | -- | -- | -- |
| Beispiel 25 | -- | 20,6 | -- | -- |
| Beispiel 26 | -- | -- | 19,9 | -- |
| Beispiel 27 | -- | -- | -- | 20,6 |
| ZnO | 3 | 3 | 3 | 3 |
| Stearinsäure | 2 | 2 | 2 | 2 |
| Naftolen ZD | 10 | 10 | 10 | 10 |
| Vulkanox 4020 | 1,5 | 1,5 | 1,5 | 1,5 |
| Protektor G 3108 | 1 | 1 | 1 | 1 |
| **2. Stufe** | | | | |
| Batch Stufe 1 | | | | |
| **3. Stufe** | | | | |
| Batch Stufe 2 | | | | |
| Vulkacit D | 2 | 2 | 2 | 2 |
| Vulkacit CZ | 1,5 | 1,5 | 1,5 | 1,5 |
| Perkacit TBzTD | 0,2 | 0,2 | 0,2 | 0,2 |
| Schwefel | 1,5 | 1,5 | 2,1 | 2,1 |

Die Kautschukmischungen werden in einem Innenmischer entsprechend der Mischvorschrift in Tabelle 10 hergestellt.

Tabelle 10

| Stufe 1 | |
|---|---|
| Einstellungen | |
| Mischaggregat | Werner & Pfleiderer E-Typ |
| Drehzahl | 60 $min^{-1}$ |
| Stempeldruck | 5,5 bar |
| Leervolumen | 1,58 L |
| Füllgrad | 0,55 |
| Durchflußtemp. | 70 °C |
| Mischvorgang | |
| 0 bis 1 min | Buna VSL 5025-1 + Buna CB 24 |
| 1 bis 3 min | 1/2 Kieselsäure, ZnO, Stearinsäure, Naftolen ZD, Silan |
| 3 bis 4 min | 1/2 Kieselsäure, Vulkanox, Protektor |
| 4 min | Säubern |
| 4 bis 5 min | Mischen |
| 5 min | Lüften |
| 5 bis 6 min | Mischen und ausfahren |
| Batch-Temp. | 145-155°C |
| Lagerung | 24 h bei Raumtemperatur |

| Stufe 2 | |
|---|---|
| Einstellungen | |
| Mischaggregat | Wie in Stufe 1 bis auf: |
| Drehzahl. | 70 $min^{-1}$ |
| Füllgrad | 0,53 |
| Mischvorgang | |
| 0 bis 2 min | Batch Stufe 1 aufbrechen |
| 2 bis 5 min | Batchtemperatur 150°C durch Drehzahlvariation halten |
| 5 min | Ausfahren |
| Batch-Temp. | 145-155°C |
| Lagerung | 4 h bei Raumtemperatur |

| Stufe 3 | |
|---|---|
| Einstellungen | |
| Mischaggregat | wie in Stufe 1 bis auf |
| Drehzahl | 40 $min^{-1}$ |
| Füllgrad | 0,51 |
| Durchflußtemp. | 50 °C |
| Mischvorgang | |
| 0 bis 2 min | Batch Stufe 2, Beschleuniger, Schwefel |
| 2 min | ausfahren und auf Labormischwalzwerk Fell bilden<br>(Durchmesser 200 mm, Länge 450 mm, Durchflußtemperatur 50°C)<br><br>Homogenisieren:<br>3* links, 3* rechts einschneiden und<br>8* bei weitem Walzenspalt (1 mm) und<br>3* bei engem Walzenspalt (3,5 mm)<br>Fell ausziehen. |
| Batch-Temp. | < 110°C |

In Tabelle 11 sind die Methoden für die Gummitestung zusammengestellt.

Tabelle 11

| Physikalische Testung | Norm/Bedingungen |
|---|---|
| ML 1+4, 100°C, 2. und 3. Stufe | DIN 53523/3, ISO 667 |
| Anvulkanisationsverhalten, 130°C<br>Anvulkanisationszeit $t_5$<br>Anvulkanisationszeit $t_{35}$ | DIN 53523/4, ISO 667 |
| Vulkameterprüfung, 165°C<br>Dmax-Dmin (dNm)<br>t10% (min) und t90% (min) | DIN 53529/3, ISO 6502 |
| Zugversuch am Ring, 23°C<br>Zugfestigkeit (MPa)<br>Spannungswerte (MPa)<br>Bruchdehnung (%) | DIN 53504, ISO 37 |
| Shore-A-Härte, 23°C (SH) | DIN 53 505 |

Tabelle 11 (fortgesetzt)

| Physikalische Testung | Norm/Bedingungen |
|---|---|
| Viskoelastische Eigenschaften, 0 bis 60°C, 16 Hz, 50 N Vorkraft und 25 N Amplitudenkraft<br>Komplexer Modul E* (MPa)<br>Verlustfaktor tan δ (-) | DIN 53 513, ISO 2856 |
| DIN-Abrieb, 10 N Kraft ($mm^3$) | DIN 53 516 |
| Ball Rebound, 60°C (%) | ASTM D 5308 |
| Goodrich-Flexometertest, 0,250 inch Hub, 25 min, 23 °C<br>Kontakttemperatur (°C)<br>Einstichtemperatur (°C)<br>Permanent Set (%) | DIN 53533, ASTM D 623 A |

Die Tabelle 12 zeigt die Ergebnisse der gummitechnischen Prüfung. Die Mischungen werden 25 min bei 165°C vulkanisiert.

Tabelle 12

| **Rohmischungsdaten** | **Einheit** | **Mischung 7 (Referenz)** | **Mischung 8** | **Mischung 9** | **Mischung 10** |
|---|---|---|---|---|---|
| ML 1+4, 2. Stufe | [-] | 79 | 48 | 49 | 48 |
| ML 1+4, 3. Stufe | [-] | 67 | 41 | 41 | 40 |
| $t_5$ | [min] | 25,7 | 31,6 | 46,0 | 42,0 |
| $t_{35}$ | [min] | 32,3 | 47,1 | 55,6 | 53,4 |
| t10% | [min] | 1,4 | 2,3 | 3,3 | 3,2 |
| **Vulkanisatdaten** | **Einheit** | **Mischung 7 (Referenz)** | **Mischung 8** | **Mischung 9** | **Mischung 10** |
| Zugfestigkeit | [MPa] | 16,0 | 14,3 | 13,5 | 13,8 |
| Spannungswert 100% | [MPa] | 2,0 | 1,1 | 1,1 | 1,1 |
| Spannungswert 300% | [MPa] | 10,4 | 5,2 | 5,2 | 5,2 |
| Spannungswert 300 %/100 % | [-] | 5,2 | 4,7 | 4,7 | 4,7 |
| Bruchdehnung | [%] | 400 | 570 | 560 | 570 |
| Shore-A-Härte | [-] | 63 | 52 | 51 | 50 |
| E* (60°C) | [MPa] | 9,9 | 5,8 | 5,7 | 5,6 |
| E* (0°C) | [MPa] | 25,7 | 15,3 | 14,9 | 14,7 |
| tan δ (60°C) | [-] | 0,124 | 0,122 | 0,121 | 0,119 |

Wie man anhand der Daten in der Tabelle 12 erkennen kann, liegen die Vorteile der Mischungen 8, 9 und 10 mit den erfindungsgemäßen Silanen im Verarbeitungsverhalten der Mischungen. Dies erkennt man besonders deutlich

an den signifikant niedrigeren Mooney-Viskositäten der Mischstufen 2 und 3 gegenüber der Referenz (Mischung 7). Daraus ergibt sich eine leichtere Verarbeitbarkeit (zum Beispiel bei Extrusion) der Mischungen. Zusätzlich dazu ist das Anvulkanisationsverhalten der Mischungen 8,9 und 10 deutlich verbessert, was an den im Vergleich zur Referenz höheren $t_5$- und $t_{35}$-Werten zu erkennen ist. Es sind des weiteren signifikant höhere t10%-Werte im Vergleich zur Referenz zu verzeichnen. Dadurch ergibt sich eine verbesserte Verarbeitungssicherheit, da die Gefahr einer sonst möglichen Vorvernetzung deutlich verringert wird. Der Verstärkungsfaktor (Spannungswert 300% / 100%) und die Zugfestigkeit liegen für die Mischungen 8,9 und 10 auf hohem Niveau bei deutlich höheren Bruchdehnungen im Vergleich zu der Referenzmischung 7. Die Mischungen mit den erfindungsgemäßen Silanen zeichnen sich im Vergleich zu ihrer Referenz-Mischung 7 insbesondere durch eine niedrigere dynamische Steifigkeit (E*) bei 0 °C aus. Daher sind bei diesen Mischungen deutlich bessere Winter-, Eis- und Naßrutscheigenschaften bei der Verwendung als Lauffläche zu erwarten. Die Mischungen verhärten bei niedrigen Temperaturen erheblich weniger als die Referenzmischung, womit von einer signifikant verbesserten Haftung auf der Straße ausgegangen werden kann. Zusätzlich besitzen diese Mischungen einen leicht niedrigeren tan $\delta$ bei 60 °C und damit einen reduzierten Rollwiderstand, der bei Verwendung als Lauffläche in einen geringeren Kraftstoffverbrauch des Fahrzeugs resultiert.
Somit ergibt sich für Mischungen mit den erfindungsgemäßen Silanen eine deutliche Verbesserung der gummitechnischen Eigenschaften im Vergleich zu Silanen des bisherigen Standes der Technik.

Mit den erfindungsgemäßen Silanen der Mischungen 8, 9 und 10 kann durch die Verwendung die Emission flüchtiger Kohlenwasserstoffe im Vergleich zur Referenz deutlich verringert werden. Die Siedepunkte der durch Hydrolyse des Silans entstehenden langkettigen Alkohole liegen oberhalb der Verarbeitungs- und Vulkanisationstemperaturen. Dadurch verbleiben diese in der Rohmischung und dem Vulkanisat und werden nicht in die Umwelt abgegeben.

Beispiel 35:

Gummitechnische Untersuchungen der Organosiliziumverbindung aus dem Beispiel 28

Die für die Kautschukmischungen verwendete Rezeptur ist in der folgenden Tabelle 13 angegeben. Dabei bedeutet die Einheit phr Gewichtsanteile, bezogen auf 100 Teile des eingesetzten Rohkautschuks. Das erfindungsgemäße Silan wird gewichtsgleich zu Si 69 und Si 266 dosiert.
Die durchgeführte Schwefelanpassung ist unter anderem notwendig, um den geringeren Schwefelgehalt des Versuchssilans zu kompensieren.

Tabelle 13

| Substanz | Mischung 11 Referenz [phr] | Mischung 12 Referenz [phr] | Mischung 13 [phr] |
|---|---|---|---|
| **1. Stufe** | | | |
| Buna VSL 5025-1 | 96 | 96 | 96 |
| Buna CB 24 | 30 | 30 | 30 |
| Ultrasil 7000 GR | 80 | 80 | 80 |
| Si 69 | 6,4 | -- | -- |
| Si 266 | -- | 6,4 | -- |
| Beispiel 28 | -- | -- | 6,4 |
| ZnO | 3 | 3 | 3 |
| Stearinsäure | 2 | 2 | 2 |
| Naftolen ZD | 10 | 10 | 10 |
| Vulkanox 4020 | 1,5 | 1,5 | 1,5 |
| Protektor G 3108 | 1 | 1 | 1 |
| **2. Stufe** | | | |
| Batch Stufe 1 | | | |
| **3. Stufe** | | | |
| Batch Stufe 2 | | | |
| Vulkacit D | 2 | 2 | 2 |
| Vulkacit CZ | 1,5 | 1,5 | 1,5 |

Tabelle 13 (fortgesetzt)

| Substanz | Mischung 11 Referenz [phr] | Mischung 12 Referenz [phr] | Mischung 13 [phr] |
|---|---|---|---|
| **2. Stufe** | | | |
| Batch Stufe 1 | | | |
| **3. Stufe** | | | |
| Batch Stufe 2 | | | |
| Perkacit TBzTD | 0,2 | 0,2 | 0,2 |
| Schwefel | 1,5 | 2,1 | 2,2 |

Die Kautschukmischungen werden in einem Innenmischer entsprechend der Mischvorschrift in Tabelle 10 hergestellt.

In Tabelle 11 sind die Methoden für die Gummitestung zusammengestellt.

Die Tabelle 14 zeigt die Ergebnisse der gummitechnischen Prüfung. Die Mischungen werden 25 min bei 165°C vulkanisiert.

Tabelle 14

| **Rohmischungsdaten** | **Einheit** | **Mischung 11 (Referenz)** | **Mischung 12 (Referenz)** | **Mischung 13** |
|---|---|---|---|---|
| ML 1+4 | [-] | 67 | 63 | 55 |
| Dmax-Dmin | [dNm] | 17,2 | 17,6 | 17,5 |
| t10% | [min] | 1,4 | 2,5 | 0,9 |
| **Vulkanisatdaten** | **Einheit** | **Mischung 11 (Referenz)** | **Mischung 12 (Referenz)** | **Mischung 13** |
| Zugfestigkeit | [MPa] | 16,0 | 14,2 | 14,5 |
| Spannungswert 100% | [MPa] | 2,0 | 1,9 | 1,8 |
| Spannungswert 300% | [MPa] | 10,4 | 9,8 | 10,9 |
| Spannungswert 300 % / 100 % | | 5,2 | 5,2 | 6,1 |
| Bruchdehnung | [%] | 400 | 380 | 360 |
| Shore-A-Härte | [-] | 63 | 63 | 58 |
| Ball Rebound | [%] | 64,0 | 61,5 | 70,9 |
| Kontakttemperatur | [°C] | 67 | 65 | 53 |
| Einstichtemperatur | [°C] | 120 | 118 | 99 |
| Permanent Set | [%] | 2,9 | 3,1 | 2,2 |
| E* (60°C) | [MPa] | 9,9 | 9,8 | 7,4 |
| E* (0°C) | [MPa] | 25,7 | 26,0 | 12,6 |
| tan $\delta$ (60°C) | [-] | 0,124 | 0,123 | 0,095 |
| DIN-Abrieb | [$mm^3$] | 89 | 94 | 78 |

Wie man anhand der Daten in der Tabelle 14 erkennen kann, liegt die Mooney-Viskosität der Mischung 13 mit dem erfindungsgemäßen Silan deutlich unter dem Niveau der Referenzmischungen 11 und 12. Dadurch ergibt sich hier analog zu den Beispielen 23, 24 und 34 eine bessere Verarbeitbarkeit der Rohmischung.
Im Bereich der statischen Vulkanisatdaten sind die Zugfestigkeiten und Bruchdehnungen auf vergleichbarem Niveau,

wobei die Mischung 13 mit dem erfindungsgemäßen Silan eine deutlich höhere Verstärkung aufweist. Dies erkennt man am höheren Spannungswert bei 300% Dehnung und dem viel höheren Verstärkungsfaktor (Spannungswert 300% / 100%). Daran ist die sehr hohe Kieselsäure-Silan-Kautschukanbindung zu erkennen.
Im Vergleich der Ergebnisse des Goodrich-Flexometer Tests zeigen sich ein geringerer Wärmeaufbau bei dynamischer Belastung und eine niedrigere dauerhafte Verformung bei der Mischung 13 gegenüber den Referenzen. Die Lebensdauer einer dynamisch belasteten Reifenlauffläche erhöht sich dadurch bei Verwendung des Silans aus Beispiel 28.
Ebenso wie im vorherigen Beispiel gezeigt, besitzt die Mischung mit dem erfindungsgemäßen Silan eine niedrigere dynamische Steifigkeit E* bei 0 °C als die Referenzen. Dies bedeutet besseres Naßrutschverhalten und Eis- und Wintereigenschaften. Wie im Beispiel 24 ist auch der tan δ bei 60 °C deutlich niedriger als bei den beiden Referenzen, womit auch der Rollwiderstand erniedrigt ist. Reifen mit einer Lauffläche mit dem erfindungsgemäßen Silan aus Beispiel 28 würden zu einem signifikant niedrigeren Kraftstoffverbrauch eines Kraftfahrzeugs im Vergleich zu Standardreifen mit Si 69 führen. Zusätzlich zu diesen positiven Eigenschaften ist auch der DIN-Abrieb der Mischung mit dem erfindungsgemäßen Silan erheblich abgesenkt. Damit wird auch hier wie in Beispiel 24 gezeigt, daß durch die Verwendung des erfindungsgemäßen Silans in einer Laufflächen-Mischung die wichtigsten Eigenschaften eines Reifens, nämlich Abrieb, Naßrutschen und Rollwiderstand signifikant verbessert werden.

Beispiel 36:

Gummitechnische Untersuchungen der Organosiliciumverbindungen aus den Beispielen 29 und 25

Die für die Kautschukmischungen verwendete Rezeptur ist in der folgenden Tabelle 15 angegeben. Dabei bedeutet die Einheit phr Gewichtsanteile, bezogen auf 100 Teile des eingesetzten Rohkautschuks. Die erfindungsgemäßen Silane werden equimolar zu 6,4 phr Si 69 bezogen auf Silizium dosiert.

Tabelle 15

| Substanz | Mischung 14 Referenz [phr] | Mischung 15 [phr] |
|---|---|---|
| **1. Stufe** | | |
| Buna VSL 5025-1 | 96 | 96 |
| Buna CB 24 | 30 | 30 |
| Ultrasil 7000 GR | 80 | 80 |
| Beispiel 29 | 16,5 | -- |
| Beispiel 25 | -- | 20,6 |
| ZnO | 3 | 3 |
| Stearinsäure | 2 | 2 |
| Naftolen ZD | 10 | 10 |
| Vulkanox 4020 | 1,5 | 1,5 |
| Protektor G 3108 | 1 | 1 |
| **2. Stufe** | | |
| Batch Stufe 1 | | |
| **3. Stufe** | | |
| Batch Stufe 2 | | |
| Vulkacit D | 2 | 2 |
| Vulkacit CZ | 1,5 | 1,5 |
| Perkacit TBzTD | 0,2 | 0,2 |
| Schwefel | 1,5 | 1,5 |

Die Kautschukmischungen werden in einem Innenmischer entsprechend der Mischvorschrift in Tabelle 10 hergestellt.
In Tabelle 11 sind die Methoden für die Gummitestung zusammengestellt.
Die Tabelle 16 zeigt die Ergebnisse der gummitechnischen Prüfung. Die Mischungen werden 25 min bei 165

°C vulkanisiert.

Tabelle 16

| **Rohmischungsdaten** | **Einheit** | **Mischung 14 (Referenz)** | **Mischung 15** |
|---|---|---|---|
| ML 1+4, 2. Stufe | [-] | 54 | 48 |
| ML 1+4, 3. Stufe | [-] | 47 | 41 |
| $t_5$ | [min] | 30,9 | 31,6 |
| $t_{35}$ | [min] | 42,7 | 47,1 |
| t10% | [min] | 2,2 | 2,3 |
| **Vulkanisatdaten** | **Einheit** | **Mischung 14 (Referenz)** | **Mischung 15** |
| Zugfestigkeit | [MPa] | 12,9 | 14,3 |
| Spannungswert 100% | [MPa] | 1,2 | 1,1 |
| Spannungswert 300% | [MPa] | 6,0 | 5,2 |
| Spannungswert 300 % / 100 % | [-] | 5,0 | 4,7 |
| Bruchdehnung | [%] | 480 | 570 |
| Shore-A-Härte | [-] | 54 | 52 |

Wie man anhand der Daten in der Tabelle 16 erkennen kann, zeigt das vollständig umgeesterte Silan aus Mischung 15 einen schnelleren und höheren Mooney-Abfall als das Silan aus Mischung 14. Außerdem ist das Anvulkanisationsverhalten besser. Dadurch wird deutlich, daß das erfindungsgemäße, stärker umgeesterte Produkt mindestens die gleiche, wenn nicht sogar eine höhere Anbindungsgeschwindigkeit an die Kieselsäure aufweist. Dies ist besonders überraschend, da bekannt ist, daß langkettige Alkoxygruppen reaktionsträger bezüglich einer Hydrolyse sind als kurzkettige, wie die fast ausschließlich verwendete Ethoxygruppe. Zu erwarten wäre das gegenteilige Eigenschaftsbild. Die Zugedehnungsdaten sind auf dem gleichen Niveau, wobei das erfindungsgemäße Silan aus Beispiel 25 eine deutlich höhere Bruchdehnung vorweist.

Beispiel 37:

Gummitechnische Untersuchungen der Organosiliciumverbindungen aus den Beispielen 30 und 17

Die für die Kautschukmischungen verwendete Rezeptur ist in der folgenden Tabelle 17 angegeben. Dabei bedeutet die Einheit phr Gewichtsanteile, bezogen auf 100 Teile des eingesetzten Rohkautschuks. Die erfindungsgemäßen Silane werden equimolar zu 6,4 phr Si 69 bezogen auf Silizium dosiert.

Tabelle 17

| Substanz | Mischung 16 Referenz [phr] | Mischung 17 [phr] |
|---|---|---|
| **1. Stufe** | | |
| Buna VSL 5025-1 | 96 | 96 |
| Buna CB 24 | 30 | 30 |
| Ultrasil 7000 GR | 80 | 80 |
| Beispiel 30 | 12,8 | -- |
| Beispiel 17 | -- | 15,0 |
| ZnO | 3 | 3 |
| Stearinsäure | 2 | 2 |

Tabelle 17 (fortgesetzt)

| Substanz | Mischung 16 Referenz [phr] | Mischung 17 [phr] |
|---|---|---|
| **1. Stufe** | | |
| Naftolen ZD | 10 | 10 |
| Vulkanox 4020 | 1,5 | 1,5 |
| Protektor G 3108 | 1 | 1 |
| **2. Stufe** | | |
| Batch Stufe 1 | | |
| **3. Stufe** | | |
| Batch Stufe 2 | | |
| Vulkacit D | 2 | 2 |
| Vulkacit CZ | 1,5 | 1,5 |
| Perkacit TBzTD | 0,2 | 0,2 |
| Schwefel | 2,1 | 2,1 |

Die Kautschukmischungen werden in einem Innenmischer entsprechend der Mischvorschrift in Tabelle 10 hergestellt.

In Tabelle 11 sind die Methoden für die Gummitestung zusammengestellt.

Die Tabelle 18 zeigt die Ergebnisse der gummitechnischen Prüfung. Die Mischungen werden 20 min bei 165°C vulkanisiert.

Tabelle 18

| **Rohmischungsdaten** | **Einheit** | **Mischung 16 (Referenz)** | **Mischung 17** |
|---|---|---|---|
| ML 1+4 | [-] | 45 | 42 |
| Dmax-Dmin | [dNm] | 15,4 | 14,0 |
| t10% | [min] | 3,0 | 2,9 |
| **Vulkanisatdaten** | **Einheit** | **Mischung 16 (Referenz)** | **Mischung 17** |
| Zugfestigkeit | [MPa] | 12,1 | 12,1 |
| Spannungswert 100% | [MPa] | 1,3 | 1,1 |
| Spannungswert 300% | [MPa] | 6,6 | 5,6 |
| Spannungswert 300 % / 100 % | | 5,1 | 5,1 |
| Bruchdehnung | [%] | 440 | 490 |
| Shore-A-Härte | [-] | 54 | 52 |
| Ball Rebound | [%] | 66,3 | 67,9 |
| E* (0°C) | [MPa] | 9,4 | 8,4 |
| tan δ (60°C) | [-] | 0,091 | 0,091 |

Auch in diesem Beispiel zeigt das erfindungsgemäße Silan aus Beispiel 17 entgegen der Erwartung Vorteile in der Viskosität gegenüber dem weniger umgeesterten Produkt aus Beispiel 30. Zudem zeigen sich weiterhin Vorteile im Zugdehnungsverhalten wegen der höheren Bruchdehnung bei gleichem Verstärkungsfaktor. Der etwas höhere Ball-Rebound bei 60°C deutet auf Vorteile im Rollwiderstand hin, während der niedrige E* bei 0°C vorteilhaft für das

Naßrutschverhalten ist.

Beispiel 38:

Gummitechnische Untersuchungen der Organosiliciumverbindungen aus den Beispielen 31, 32 und 33

Die für die Kautschukmischungen verwendete Rezeptur ist in der folgenden Tabelle 19 angegeben. Dabei bedeutet die Einheit phr Gewichtsanteile, bezogen auf 100 Teile des eingesetzten Rohkautschuks. Die erfindungsgemäßen Silane werden equimolar bezogen auf Silizium dosiert.

Tabelle 19.

| Substanz | Mischung 18 Referenz [phr] | Mischung 19 [phr] | Mischung 20 [phr] |
|---|---|---|---|
| **1. Stufe** | | | |
| Buna VSL 5025-1 | 96 | 96 | 96 |
| Buna CB 24 | 30 | 30 | 30 |
| Ultrasil 7000 GR | 80 | 80 | 80 |
| Beispiel 31 | 5,4 | -- | -- |
| Beispiel 32 | -- | 6,72 | -- |
| Beispiel 33 | -- | -- | 7,92 |
| ZnO | 3 | 3 | 3 |
| Stearinsäure | 2 | 2 | 2 |
| Naftolen ZD | 10 | 10 | 10 |
| Vulkanox 4020 | 1,5 | 1,5 | 1,5 |
| Protektor G 3108 | 1 | 1 | 1 |
| **2. Stufe** | | | |
| Batch Stufe 1 | | | |
| **3. Stufe** | | | |
| Batch Stufe 2 | | | |
| Vulkacit D | 0,25 | 0,25 | 0,25 |
| Vulkacit CZ | 1,5 | 1,5 | 1,5 |
| Perkacit TBzTD | 0,5 | 0,5 | 0,5 |
| Schwefel | 2,2 | 2,2 | 2,2 |

Die Kautschukmischungen werden in einem Innenmischer entsprechend der Mischvorschrift in Tabelle 10 hergestellt.

In Tabelle 11 sind die Methoden für die Gummitestung zusammengestellt.

Die Tabelle 20 zeigt die Ergebnisse der gummitechnischen Prüfung. Die Mischungen werden 25 min bei 165°C vulkanisiert.

Tabelle 20

| **Rohmischungsdaten** | **Einheit** | **Mischung 18 (Referenz)** | **Mischung 19** | **Mischung 20** |
|---|---|---|---|---|
| ML 1+4, 3. Stufe | [-] | 60 | 57 | 57 |
| $t_5$ | [min] | 20,7 | 22,2 | 24,1 |
| $t_{35}$ | [min] | 24,5 | 28,1 | 32,0 |
| t10% | [min] | 2,0 | 2,1 | 2, 3 |

Tabelle 20 (fortgesetzt)

| Vulkanisatdaten | Einheit | Mischung 18 (Referenz) | Mischung 19 | Mischung 20 |
|---|---|---|---|---|
| Zugfestigkeit | [MPa] | 12,2 | 12,6 | 12,0 |
| Spannungswert 100% | [MPa] | 1,7 | 1,8 | 1,8 |
| Spannungswert 300% | [MPa] | 11,3 | 11,5 | 11,9 |
| Spannungswert 300 % / 100 % | [-] | 6,6 | 6,4 | 6,6 |
| Bruchdehnung | [%] | 310 | 320 | 300 |
| Shore-A-Härte | [-] | 56 | 58 | 56 |
| E* (0°C) | [MPa] | 12,3 | 10,4 | 9,8 |
| tan δ (60°C) | [-] | 0,102 | 0,096 | 0,095 |
| Ball Rebound, 60°C | [%] | 71,2 | 72,2 | 72,3 |

Auch in diesem Beispiel zeigen die erfindungsgemäßen Silane aus den Beispielen 32 und 33 die analog bereits beschriebenen Vorteile in der Viskosität und dem Verarbeitungsverhalten gegenüber dem weniger umgesetzten Produkt aus Beispiel 31. Das Anvulkanistionsverhalten ist ebenfalls verbessert. Daher ergibt sich eine höhere Verarbeitungssicherheit zum Beispiel beim Extrudieren. Erwähnenswert zudem ist, daß die Kettenlänge der langkettigen Alkoxygruppen deutlich weniger Einfluß auf das gummitechnische Wertebild hat als der Grad der Umesterung. Dies erkennt man daran, daß die Unterschiede im Gummiwertebild der Mischungen 19 und 20 geringer sind als im Vergleich zur Referenz Mischung 18.

## Patentansprüche

1. Organosiliciumverbindungen der allgemeinen Formel I

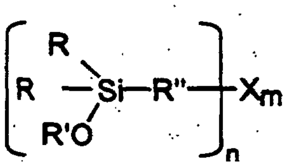

ausgenommen (3-Thiotyanatopropyl)-tris-(trimethylsiloxy) silan, wobei R gleich oder verschieden und eine R'O-Gruppe oder $C_1$-$C_{12}$-Alkylgruppe ist,
R' gleich oder verschieden und eine $C_{12}$-$C_{24}$ verzweigte oder unverzweigte einbindige Alkyl- oder Alkenyl-Gruppe, Arylgruppe, Aralkylgruppe oder $R'''_3Si$, mit R''' gleich $C_1$-$C_{30}$ verzweigte oder unverzweigte Alky- oder Alkenyl-Gruppe Aralkylgruppe oder Ärylgruppe, ist,
, R" eine verzweigte oder unverzweigte, gesättigte oder ungesättigte, aliphatische, aromatische oder gemischt aliphatische /aromatische zweibindige $C_1$-$C_{30}$ Kohlenwasserstoffgruppe ist,
X SH mit n=1 und m=1, SCN mit n=1 und oder S mit n=2 und m=1-14 und Gemische davon ist.

2. Organosiliciumverbindungen gemäß Anspruch 1, **dadurch gekennzeichnet, daß** diese auf einen inerten organischen oder anorganischen Träger aufgezogen oder mit einem organischen oder anorganischen Träger vorreagiert sind.

3. Organosiliciumverbindungen gemäß Anspruch 1, **dadurch gekennzeichnet, daß** die Organosiliciumverbindungen der allgemeinen Formel I oligo- oder polymerisiert sind.

4. Verfahren zur Herstellung der erfindungsgemäßen Organosiliciumverbindungen gemäß Anspruch 1, **dadurch gekennzeichnet, daß** man Silane der allgemeinen Formel II

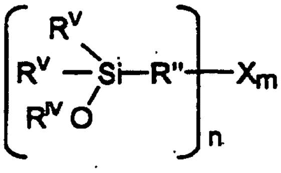

II

wobei $R^V$ gleich oder verschieden und eine $R^{IV}O$- oder $C_1$-$C_{12}$-Alkylgruppe ist, $R^{IV}$ gleich oder verschieden und eine Methyl- oder Ethyl-Gruppe ist, mit Alkoholen der allgemeinen Formel- R'-OH, in der R` die oben angegebene Bedeutung aufweist, unter Abspaltung von $R^{IV}$-OH, katalysiert umsetzt, wobei das molare Verhältnis von R'-OH zu $R^{IV}$-Gruppen mindestens 1 ist, und $R^{IV}$-OH vom Reaktionsgemisch kontinuierlich oder diskontinuierlich abtrennt.

5. Verfahren gemäß Anspruch 4, **dadurch gekennzeichnet, daß** man als Alkohole der allgemeinen Formel R'OH reine Alkohole oder Alkoholgemische einsetzt.

6. Verfahren gemäß Anspruch 4, **dadurch gekennzeichnet, daß** man als Katalysator metallfreie oder metallhaltige Katalysatoren einsetzt.

7. Verfahren nach Anspruch 4, **dadurch gekennzeichnet, daß** man als Metallverbindungen Verbindungen der 3.-7. Gruppe, der 13.-14.Gruppe und/oder der Lanthanidengruppe einsetzt.

8. Verfahren nach Anspruch 7, **dadurch gekennzeichnet, daß** man als Metallverbindungen Titanalkoxide einsetzt.

9. Verfahren nach Anspruch 4, **dadurch gekennzeichnet, daß** man als Katalysator organische Säuren einsetzt.

10. Verfahren gemäß Anspruch 4, **dadurch gekennzeichnet, daß** man die Reaktion unter Ausschluß von Feuchtigkeit und Sauerstoff bei reduzierten Druck durchführt.

11. Kautschukmischungen, **dadurch gekennzeichnet, daß** sie Kautschuk, Füllstoff, gegebenenfalls weitere Kautschukhilfsmittel, sowie mindestens eine Organosiliciumverbindung gemäß Anspruch 1 , 2 oder 3 enthalten.

12. Verwendung von Kautschukmischungen gemäß Anspruch 11 zur Herstellung von Formkörpern

13. Verwendung von Kautschukmischungen gemäß Anspruch 11 zur Herstellung von Luftreifen, Reifenlaufflächen, Kabelmänteln, Schläuchen, Treibriemen, Förderbändern, Walzenbelägen, Reifen, Schuhsohlen, Dichtungsringen und Dämpfungselementen.

## Claims

1. Organosilicon compounds of the general formula I

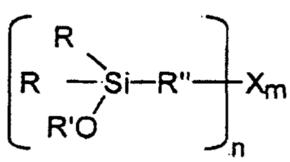

,

I

except for (3-thiocyanatopropyl)
tris(trimethylsiloxy)silane,
in which R are identical or different and denote an R'O group or $C_1$-$C_{12}$-alkyl group,
R' are identical or different and denote a $C_{12}$-$C_{24}$ branched or unbranched single-bond alkyl or alkenyl group, aryl group, aralkyl group or R '''$_3$Si, where R''' denotes a $C_1$-$C_{30}$ branched or unbranched alkyl or alkenyl group, aralkyl

group or aryl group,
R" is a branched or unbranched, saturated or unsaturated, aliphatic, aromatic or mixed aliphatic/aromatic double-bond $C_1$-$C_{30}$ hydrocarbon group,
X denotes SH where n=1 and m=1, SCN where n=1 and m=1, or S where n=2 and m=1-14, and mixtures thereof.

**2.** Organosilicon compounds according to claim 1, **characterised in that** these are supported on an inert organic or inorganic carrier or are previously reacted with an organic or inorganic carrier.

**3.** Organosilicon compounds according to claim 1, **characterised in that** the organosilicon compounds of the general formula I are oligopolymerised or polymerised.

**4.** Process for the production of the organosilicon compounds of the invention according to claim 1, **characterised in that** silanes of the general formula II

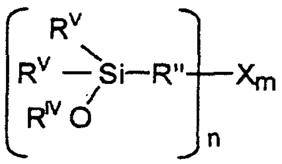

II

wherein $R^V$ are identical or different and denote an $R^{IV}O$-, or $C_1$-$C_{12}$-alkyl group,
$R^{1V}$ are identical or different and denote a methyl or ethyl group,
are catalytically reacted with alcohols of the general formula R'-OH in which R' has the meaning given above, with elimination of $R^{IV}OH$, wherein the molar ratio of R'-OH to $R^{IV}O$- groups is at least 1 and $R\ ^{IV}OH$ is removed continuously or discontinuously from the reaction mixture.

**5.** Process according to claim 4, **characterised in that** pure alcohols or alcohol mixtures are used as alcohols of the general formula R'-OH.

**6.** Process according to claim 4, **characterised in that** metal-free or metal-containing catalysts are used as catalyst.

**7.** Process according to claim 4, **characterised in that** compounds of the $3^{rd}$-$7^{th}$ group, of the $13^{th}$-$14^{th}$ group and/or of the lanthanide group are used as metal compounds.

**8.** Process according to claim 7, **characterised in that** titanium alkoxides are used as metal compounds.

**9.** Process according to claim 4, **characterised in that** organic acids are used as catalyst.

**10.** Process according to claim 4, **characterised in that** the reaction is carried out under the exclusion of moisture and oxygen and under reduced pressure.

**11.** Rubber mixtures, **characterised in that** they contain rubber, filler, optionally further rubber auxiliary substances, as well as at least one organosilicon compound according to claim 1, 2 or 3.

**12.** Use of rubber mixtures according to claim 11 for the production of moulded articles.

**13.** Use of rubber mixtures according to claim 11 for the production of pneumatic tyres, tyre treads, cable sheathing, hoses, drive belts, conveyor belts, roller coverings, tyres, shoes soles, sealing rings and damping elements.

## Revendications

**1.** Composés organosiliciés de formule générale 1

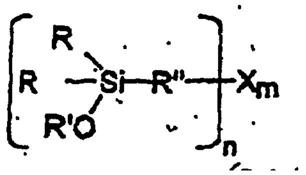

excepté le (3-thiotyanatopropyl)-tris(triméthylsiloxy)silane,
dans laquelle R est identique ou différent et représente un groupe R'O ou un groupe alkyle en $C_1$ à $C_{12}$,
R' est identique ou différent et représente un groupe alkyle ou alcényle univalent ramifié ou non ramifié en $C_{12}$ à $C_{24}$, un groupe aryle, un groupe aralkyle, ou $R'''_3Si$, avec R''' identique à un groupe alkyle ou alcényle ramifié ou non ramifié en $C_1$ à $C_{30}$, un groupe aralkyle ou aryle,
R'' représente un groupe hydrocarbure en $C_1$ à $C_{30}$ bivalent ramifié ou non ramifié, saturé ou non saturé, aliphatique, aromatique ou mixte aliphatique / aromatique,
X représente SH avec n = 1 et m = 1, SCN avec n = 1 et m = 1 ou S avec n = 2 et m = 1-14 et des mélanges de ces substances.

2. Composés organosiliciés selon la revendication 1,
**caractérisés en ce que**
ceux-ci sont appliqués sur un support organique ou inorganique inerte ou mis en réaction préalable avec un support organique ou inorganique.

3. Composés organosiliciés selon la revendication 1,
**caractérisés en ce que**
les composés organosiliciés de formule générale I sont oligomérisés ou polymérisés.

4. Procédé de préparation de composés organosiliciés de l'invention selon la revendication 1,
**caractérisé en ce qu'**
on convertit par catalysation des silanes de formule générale II

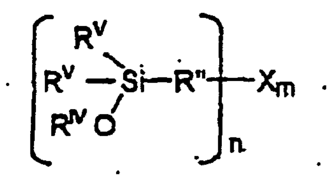
II

dans laquelle $R^V$ est identique ou différent et représente un groupe $R^{IV}O$ ou alkyle en $C_1$ à $C_{12}$,
$R^{IV}$ est identique ou différent et représente un groupe méthyle ou éthyle, avec des alcools de formule générale R'-OH, dans laquelle R' a la signification indiquée ci-dessus, en clivant $R^{IV}$-OH, le rapport molaire de R'-OH aux groupes $R^{IV}O$ étant d'au moins 1, et on sépare $R^{IV}$-OH du mélange réactionnel en continu ou en discontinu.

5. Procédé selon la revendication 4,
**caractérisé en ce que**
comme alcools de formule générale R'OH, on utilise des alcools purs ou des mélanges d'alcools.

6. Procédé selon la revendication 4,
**caractérisé en ce que**
comme catalyseur, on utilise des catalyseurs sans métal ou métalliques.

7. Procédé selon la revendication 4,
**caractérisé en ce que**
comme composés métalliques, on utilise des composés du $3^{ème}$, $7^{ème}$, $13^{ème}$-$14^{ème}$ groupe et/ou du groupe des lanthanides.

8. Procédé selon la revendication 7,
**caractérisé en ce qu'**
on utilise des alcoxydes de titane en tant que composés métalliques.

9. Procédé selon la revendication 4,
**caractérisé en ce qu'**
on utilise des acides organiques en tant que catalyseur.

10. Procédé selon la revendication 4,
**caractérisé en ce qu'**
on réalise la réaction sous exclusion d'humidité et d'oxygène à pression réduite.

11. Mélanges de caoutchoucs,
**caractérisés en ce qu'**
ils contiennent du caoutchouc, une charge, le cas échéant d'autres auxiliaires du caoutchouc, ainsi qu'au moins un composé organosilicié selon la revendication 1, 2 ou 3.

12. Utilisation de mélanges de caoutchoucs selon la revendication 11, pour fabriquer des corps moulés.

13. Utilisation de mélanges de caoutchoucs selon la revendication 11, pour fabriquer des pneumatiques, des bandes de roulement de pneus, des gaines de câbles, des tuyaux, des courroies, des bandes transporteuses, des revêtements de rouleaux, des pneus, des semelles de chaussures, des bagues d'étanchéité et des éléments amortisseurs.